# EUROPÄISCHE PATENTSCHRIFT

(11) **EP 2 165 901 B1**
(45) Veröffentlichungstag und Bekanntmachung des Hinweises auf die Patenterteilung: **07.09.2011**
(21) Anmeldenummer: 09170257.1
(22) Anmeldetag: 15.09.2009
(51) Int. Cl.: B60T 13/26, B60T 13/58, B60T 13/68

(54) **Bremseinrichtung für ein hydraulisch gebremstes Zugfahrzeug mit pneumatisch gebremstem Anhänger**
Brake device for a hydraulically braked traction vehicle with pneumatically braked trailer
Dispositif de freinage pour un véhicule de traction à freinage hydraulique doté d'une remorque à freinage pneumatique

(30) Priorität: 20.09.2008 DE 102008048208
(43) Veröffentlichungstag der Anmeldung: 24.03.2010
(73) Patentinhaber: Haldex Brake Products GmbH, 69123 Heidelberg (DE)
(72) Erfinder: Sulzyc, Georg, 68535, Edingen-Neckarhausen (DE)
(74) Vertreter: Hüppe, Paul Wilhelm

(56) Entgegenhaltungen:
- EP-A- 1 571 060
- DE-A1- 3 338 690
- DE-A1- 4 417 667

## Beschreibung

### TECHNISCHES GEBIET DER ERFINDUNG

Die vorliegende Erfindung betrifft eine Bremseinrichtung für ein hydraulisch gebremstes Zugfahrzeug, welches mit einem pneumatisch gebremsten Anhänger koppelbar ist, gemäß dem Oberbegriff des Anspruchs 1. Weiterhin betrifft die Erfindung eine Verwendung einer derartigen Bremseinrichtung.

### STAND DER TECHNIK

DE 32 07 793 A1 offenbart eine zweikreisige Druckluft-Bremsanlage für einen Anhänger. Der Anhänger wird über geeignete Kupplungsköpfe von einem Zugfahrzeug mit einem Vorratsleitungsdrucksdruck sowie einem Bremsdruck und ggf. mit einem elektrischen Bremssignal, versorgt. Anhängerseitig wird der Bremsdruck auf zwei redundanten Pfaden bearbeitet: Einerseits wird der Bremsdruck auf herkömmliche Weise als Steuerdruck einem Anhängerbremsventil zugeführt, dessen Ausgangsdruck über ein 3/2-Wegeventil, welches zur Vermeidung eines Blockierens bei einer Bremsung eine Entlastung ermöglicht, und ein Wechselventil den Bremszylindern des Anhängers zugeführt wird. Allerdings weist die Druckschrift darauf hin, dass infolge der Länge der pneumatischen Leitungsverbindungen in dem Anhänger und der erforderlichen relaisartigen Betätigung der Bremsen über das Anhängerbremsventil Zeit verloren geht, bis die Bremsen des Anhängers ansprechen. Das verzögerte Ansprechverhalten hat ein "Auflaufen" des Anhängers auf das Zugfahrzeug bei der Bremsung zur Folge. Ein derartiges Auflaufen ist unerwünscht - vielmehr soll während eines Bremsvorgangs der Zug mit Zugfahrzeug und Anhängerfahrzeug in gestrecktem Zustand gehalten werden. Aus diesem Grund schlägt die Druckschrift vor, für den zweiten Pfad in dem Anhänger der Bremsdruck über einen Druck-Spannungs-Wandler zu erfassen. Das mit dem Bremsdruck korrelierende elektrische Ausgangssignal des Druck-Spannungs-Wandlers wird einer Schalteinrichtung zugeführt, die unter ergänzender Berücksichtigung eines Lastsensors sowie eines Raddrehzahlsensors ein Regelsignal für ein Drucksteuerventil ermittelt. Dem Drucksteuerventil wird eingangsseitig Druckluft aus einem Behälter zugeführt. Das Drucksteuerventil erzeugt nach Maßgabe des elektrischen Regelsignals einen Bremsdruck, welcher ebenfalls über das Wechselventil mit den Bremszylindern verbunden ist. Bei einer Bremsbetätigung steht der über den zweiten, elektrisch angesteuerten Pfad erzeugte Bremsdruck infolge des verzögerten Ansprechverhaltens des pneumatischen Pfads früher an dem Wechselventil an, so dass ein unmittelbares Ansprechverhalten gewährleistet ist. Im Normalfall wird für die Bremsbetätigung und Aufrechterhaltung der Bremswirkung somit der zweite, elektrisch geregelte Leitungszweig verwendet. Lediglich für den Ausnahmefall, dass über das Drucksteuerventil kein Bremsdruck oder ein lediglich verminderter Bremsdruck erzeugt wird, ändert das Wechselventil seine Stellung, so dass der Bremsdruck des ersten, pneumatischen Pfads den Bremszylindern zugeführt wird.

Auch DE 33 38 690 A1 beschäftigt sich mit einer Vermeidung eines verzögerten Ansprechverhaltens der Bremsanlage des Anhängers gegenüber der Bremsanlage des Zugfahrzeugs. Hier wird der Einsatz eines Anhängersteuerventils vorgeschlagen, welches in dem Zugfahrzeug angeordnet sein soll und in dem einem Behälter des Anhängers entstammende Druckluft über ein Ein-/Auslassventil in einen geeigneten Bremsdruck für den Anhänger umgewandelt wird. Eine Betätigung des Ein-/Auslassventils ist über zwei parallele Pfade, nämlich einen hydraulischen Pfad und einen pneumatischen Pfad, möglich. Hierzu ist ein Bremspedal des Zugfahrzeugs einerseits mechanisch mit einem hydraulischen Bremszylinder gekoppelt und andererseits mechanisch mit einem pneumatischen, als 3/2-Wegeventil ausgebildeten Be- und Entlüftungsventil gekoppelt. Mit einer Betätigung des Bremspedals wird vor einer vollständigen Öffnung des hydraulischen Bremszylinders das Be- und Entlüftungsventil aus einer Entlüftungsstellung in eine Belüftungsstellung verbracht. In dieser Belüftungsstellung wird ein Vorratsbehälter des Zugfahrzeugs über das Be- und Entlüftungsventil mit einer Steuerkammer verbunden. Der Druckaufbau in der Steuerkammer führt zur Verschiebung eines mit dem Ein-/Auslassventil gekoppelten Steuerkolbens, womit das Ein-/Auslassventil in eine begrenzte Einlassstellung gesteuert wird, in welcher ein begrenzter Bremsdruck für den Anhänger aufgebaut wird. Mit weiterer Betätigung des Bremspedals wird der hydraulische Bremszylinder weiter und vollständig geöffnet. Der Hydraulikdruck wird einer hydraulischen Steuerkammer des Anhängersteuerventils zugeführt, wo dieser auf einen weiteren Steuerkolben einwirkt, über welchen das Ein-/Auslassventil von der bereits erreichten begrenzten Einlassstellung noch weiter in Einlassrichtung geöffnet wird, was zur Erzeugung des gewünschten Bremsdrucks für die Bremsanlage des Anhängers führt. Damit beruht dieses Anhängersteuerventil auf dem kumulativen Einsatz eines pneumatischen und eines hydraulischen Pfads bei mechanischer Aktivierung des pneumatischen Pfads durch das Bremspedal.

Ein entsprechendes Anhängersteuerventil ist in DE 39 18 226 A1 beschrieben, wobei hier allerdings der Steuerraum für die pneumatische Ansteuerung mit einer gegen eine Feder verschieblichen Wandung ausgebildet ist. Unter Variation der Vorspannung der Feder kann eine Einstellung des Ansprechverhaltens des Ansteuerventils, insbesondere eine Einstellung des sogenannten "Einsprungs" oder der "Voreilung", erfolgen.

Aus WO 95/32116 ist ein Bremssignalgeber bekannt, über welchen in einem elektrischen Modul unter Einsatz eines Potentiometers ein elektrisches Bremssignal erzeugt wird. In einem pneumatischen Modul wird ein pneumatisches Steuersignal, hier für zwei Bremskreise I und II, erzeugt wird. Im Normalbetrieb wird das elektrische Bremssignal einem Steuergerät zugeführt, welches elektro-pneumatische Druckregelmodule derart ansteuert, dass der Betriebsbremse des Zugfahrzeugs ein dem elektrischen Bremssignal entsprechender Bremsdruck zugeführt wird. Die von dem pneumatischen Modul des Bremssignalgebers erzeugten Ausgangsdrücke werden einem Anhängersteuerventil zugeführt, welches einen geeigneten Bremsdruck für das Anhängerfahrzeug ermittelt. Um auch eine Bremsung des Zugfahrzeugs für einen Ausfall der elektrischen Steuerung zu ermöglichen, wird den Druckregelmodulen auch das pneumatische Ausgangssignal des Bremssignalgebers zugeführt. Für den Ausfall der elektrischen Steuerung können die Druckregelmodule auch pneumatisch einen geeigneten Bremsdruck für das Zugfahrzeug aussteuern, wobei der auf pneumatischem Wege ausgesteuerte Bremsdruck dem auf elektrischem Wege ausgesteuerten Bremsdruck im Wesentlichen entsprechen soll.

DE 195 81 733 B4 offenbart ein redundantes Bremssystem mit einer elektrischen Aussteuerung pneumatischer oder hydraulischer Bremsdrücke für das Zugfahrzeug und den Anhänger und einer mechanisch-pneumatischen Aussteuerung pneumatischer Bremsdrücke für das Zugfahrzeug und den Anhänger. Hierbei wird ein elektrisches Bremssignal mittels eines mit dem Bremspedal gekoppelten Potentiometers erzeugt. Solange die elektrische Steuereinrichtung funktionsfähig ist, wird durch die elektrische Steuereinheit in dem pneumatisch ausgesteuerten Kreis ein Absperrventil betätigt. Durch selektives Betreiben dieses Absperrventils kann somit für funktionierende elektronische Aussteuerung die pneumatische Aussteuerung in dem anderen Zweig deaktiviert werden, während die pneumatische Aussteuerung für nicht funktionierende elektrische Aussteuerung mit geöffnetem Absperrventil wirksam werden kann.

EP 0 832 803 B1 offenbart eine Bremsanlage mit einem Anhängersteuerventil, dem als Steuerdruck der Hydraulikdruck von zwei Betriebsbremskreisen des Zugfahrzeugs zugeführt wird zwecks Erzeugung eines geeigneten pneumatischen Ausgangsdrucks für einen Kupplungskopf Bremse. Ein weiterer Steuereingang des Anhängersteuerventils wird je nach Stellung eines Feststellbremshebels (abgestuft) be- und entlüftet, so dass durch Betätigung des Feststellbremshebels eine Betätigung der Bremsen des Anhängers unabhängig von einer Betätigung der Betriebsbremsen des Zugfahrzeugs möglich sein soll.

Für die aus DE 197 52 147 bekannte Bremseinrichtung besitzt eirt Anhängersteuerventil zwei separate pneumatische Steuereingänge. Der erste Steuereingang kann über die Betätigung einer Handbremseinrichtung mit einem pneumatischen Steuerdruck beaufschlagt werden. Hingegen wird der zweite Steuereingang von einem pneumatischen Steuerdruck beaufschlagt, weicher von einem elektrisch betätigten Proportionalventil vorgeben wird, dem als Eingangsdruck der Druck eines Vorratsbehälters zugeführt wird. Das elektrische Steuersignal für das Proportionalventil entspricht hier dem hydraulischen Bremsdruck.

EP 1 571 060 A1 offenbart eine Bremseinrichtung für ein Zugfahrzeug mit separaten Bremspedalen für eine rechte und linke Seite des Zugfahrzeugs. Bei gleicher Betätigung beider Bremspedale erfolgt vorrangig eine Abbremsung des Zugfahrzeugs, während für eine ungleiche Betätigung der beiden Bremspedale vorrangig eine Lenkung des Fahrzeugs über die Bremsen erfolgt, was bevorzugt für einen Offroad-Betrieb genutzt werden soll. Die Bremspedale erzeugen über Hauptbremszylinder einen Hydraulikdruck, welcher einem hydraulischen Steueranschluss eines Steuerventils zugeführt wird. Dem Steuerventil wird aus einem Behälter ein pneumatischer Versorgungsdruck zugeführt. Das Steuerventil wandelt den hydraulischen Druck um in einen entsprechenden pneumatischen Druck, welcher einer Kupplungskopf Bremse zugeführt wird. Zur Vermeidung eines verzögerten Druckaufbaus am Kupplungskopf Bremse und damit zur Erzeugung einer Bremskraft an dem Anhänger, die gegenüber der Bremskraft an dem Zugfahrzeug verzögert ist, besitzt das Steuerventil zusätzlich zu dem hydraulischen Steueranschluss einen pneumatischen Steueranschluss, über welchen bereits vor Aufbau eines Hydraulikdrucks ein Steuerdruck vorgegeben werden kann, der einen Duckaufbau auf einen Druck von 1 bis 2 bar am Kupplungskopf Bremse zur Folge hat. Zur Erzeugung des pneumatischen Steuerdrucks an dem Steuerventil erfasst ein Sensor die Betätigung des Bremspedals. Ein entsprechendes elektrisches Signal wird als elektrisches Steuersignal für ein Magnetventil in Ausgestaltung als 3/2-Wegeventil mit einer von dem Behälter gespeisten Belüftungsstellung sowie einer Entlüftungsstellung verwendet. Der Ausgangsdruck dieses Magnetventils wird dem pneumatischen Steuereingang des Steuerventils über ein manuell vom Fahrer einstellbares Regelventil zugeführt, über welches der Fahrer manuell die Verzögerung zwischen der Betätigung der hydraulisch betätigten Bremsen des Zugfahrzeugs und den pneumatischen Bremsen des Anhängers einstellen kann. Das elektrische Ausgangssignal eines Handbremsschalters des Zugfahrzeugs wird als Steuersignal für ein weiteres Magnetventil in Ausgestaltung als 3/2-Wegeventil mit einer von dem Behälter gespeisten Belüftungsstellung sowie einer Entlüftungsstellung genutzt. Der Ausgangsdruck des Magnetventils wird über ein Wechselventil, dessen anderer Eingang mit dem hydraulisch und pneumatisch angesteuerten Steuerventil verbunden ist, dem Kupplungskopf Bremse zugeführt.

Weiterer Stand der Technik ist aus DE 44 17 667 A1 bekannt.

### AUFGABE DER ERFINDUNG

Der vorliegenden Erfindung liegt eine Aufgabe zugrunde, eine Bremseinrichtung für ein hydraulisch gebremstes Zugfahrzeug vorzuschlagen, welche erweiterte Möglichkeiten für die Vorgabe eines pneumatischen Bremsdrucks für einen Anhänger, insbesondere hinsichtlich der Gestaltung des Ansprechverhaltens und/oder der Gestaltung der Bremsdruckverläufe, gewährleistet. Weiterhin liegt der Erfindung die Aufgabe zugrunde, eine neuartige Verwendung einer derartigen Bremseinrichtung vorzuschlagen.

### LÖSUNG

Die Aufgabe der Erfindung wird erfindungsgemäß mit einer Bremseinrichtung mit den Merkmalen des unabhängigen Patentanspruchs 1 gelöst. Weitere erfindungsgemäße Ausgestaltungen einer derartigen Bremseinrichtung ergeben sich entsprechend den Merkmalen der Patentansprüche 2 bis 9. Eine weitere Lösung der der Erfindung zugrunde liegenden Aufgabe ist gegeben durch eine Verwendung einer Bremseinrichtung entsprechend dem unabhängigen Patentanspruch 10.

### BESCHREIBUNG DER ERFINDUNG

Die vorliegende Erfindung findet Einsatz für eine Bremseinrichtung eines beliebigen, hydraulisch gebremsten Zugfahrzeugs, welches optional oder ständig mit einem pneumatisch gebremsten Anhänger koppelbar oder gekoppelt ist. Zur Erzeugung der hydraulischen Bremswirkung besitzt die Bremseinrichtung ein Bremsbetätigungsorgan, welches im einfachsten Fall als ein Bremspedal ausgebildet ist. Weitere beispielhafte Ausgestaltungen für ein Bremsbetätigungsorgan sind Schalter oder Hebel, wie diese beispielsweise für eine Streckbremsfunktion, die gesetzlich vorgegebene Prüffunktion für Nutzfahrzeuge, eine Hilfsbremsfunktion und/oder eine Handbremsfunktion zum Einsatz kommen. Entsprechend der Betätigung des Bremsbetätigungsorgans wird mittels eines (Haupt-)Bremszylinders ein Hydraulikdruck erzeugt, welcher an eine hydraulische Betriebsbremse weitergeleitet wird.

Während aus dem eingangs aufgeführten Stand der Technik für die Erzeugung eines pneumatischen Bremsdrucks für den Anhänger lediglich Ausführungsformen bekannt sind, für die über geeignete Ventileinrichtungen oder Steuerkolben eine Erzeugung des pneumatischen Bremsdrucks für den Anhänger auf mechanischem, pneumatischem und/oder hydraulischem Weg erfolgt, was die eingangs erläuterten Probleme hinsichtlich der Gestaltung der pneumatischen Bremsdruckkennlinie und des verzögerten Ansprechverhaltens mit sich bringen kann, schlägt die Erfindung erstmalig vor, den pneumatischen Bremsdruck für den Anhänger über einen elektro-pneumatischen Beaufschlagungspfad zu erzeugen. In diesem Beaufschlagungspfad ist ein Messorgan vorgesehen, welches ein mit der Betätigung des Bremsbetätigungsorgans korrelierendes (oder sogar übereinstimmendes) elektrisches Signal erzeugt. Hier kann ein beliebiges Messprinzip Einsatz finden. Beispielsweise kann über eine Weg- oder Winkelerfassung eines als Bremspedal ausgebildeten Bremsbetätigungsorgans die Betätigung erfasst werden. Ebenfalls möglich ist die Erfassung eines Weges des Bremszylinders, in welchem der Hydraulikdruck erzeugt wird. Um lediglich einige weitere Beispiele zu nennen, ist es ebenfalls möglich, über einen Drucksensor den Hydraulikdruck in der hydraulischen Bremsanlage des Zugfahrzeugs zu erfassen. Auch der multifunktionale Einsatz eines Bremslichtschalters als Messorgan zur Erfassung der Betätigung des Bremsbetätigungsorgans ist möglich.

Bei dem durch das Messorgan erzeugten elektrischen Signal kann es sich um ein binäres Signal (Bremstätigung/keine Bremsbetätigung) handeln, ein abgestuftes Signal mit mehr als zwei Stufen oder ein kontinuierliches Signal, welches linear oder nicht linear und unmittelbar oder mittelbar von der Betätigung des Bremsbetätigungsorgans abhängt.

Weiterhin ist in dem elektro-pneumatischen Beaufschlagungspfad ein Druckregelmodul angeordnet. Das Druckregelmodul erzeugt in Abhängigkeit des elektrischen Signals einen pneumatischen Ausgangsdruck, der zur Erzeugung eines pneumatischen Bremsdrucks für den Anhänger Einsatz findet. Für ein derartiges Druckregelmodul kann eine Vielzahl an sich bekannter Ventile oder Ventileinheiten Einsatz finden, die den vorgenannten Zweck erfüllen. Im einfachsten Fall ist das Druckregelmodul als elektrisch angesteuertes Magnetventil oder Relaisventil ausgebildet, bei dem ein Druck aus einer Druckluftquelle wie einem Behälter und/oder einer Fördereinrichtung nach Maßgabe des elektrischen Signals in den pneumatischen Ausgangsdruck umgewandelt wird. Der pneumatische Ausgangsdruck kann unmittelbar dem Kupplungskopf des Zugfahrzeugs für den Anhänger als Bremsdruck zugeführt werden. Ebenfalls möglich ist, dass der pneumatische Ausgangsdruck des Druckregelmoduls lediglich als Vorsteuerdruck für eine nachgeschaltete Ventileinheit verwendet wird. Durch die Nutzung des elektro-pneumatischen Beaufschlagungspfads sind gegenüber dem Stand der Technik vergrößerte Möglichkeiten hinsichtlich der Gestaltung der Kennlinie für den pneumatischen Bremsdruck für den Anhänger in Abhängigkeit von der Betätigung des Bremsbetätigungsorgans gewährleistet. Während die hydraulische Bremsbetätigung unter Umständen mit einem verzögerten Ansprechverhalten oder einer Totzeit verbunden ist, kann das Messorgan unter Umständen ohne zeitliche Verzögerung die Betätigung des Bremsbetätigungsorgans erfassen. Das erzeugte elektrische Signal kann dem Druckregelmodul, auch für den Fall, dass dieses entfernt von dem Bremsbetätigungsorgan und dem Bremszylinder des Zugfahrzeugs angeordnet ist, ohne wesentliche Zeitverzögerung zugeführt werden. Weiterhin kann über eine geeignete Steuereinrichtung eine gezielte Beeinflussung des elektrischen Signals erfolgen, wobei beispielsweise Nichtlinearitäten erzeugt oder beseitigt werden können oder eine Berücksichtigung anderer Betriebsparameter für die Erzeugung des Ausgangsdrucks erfolgen kann. Im einfachsten Fall kann beispielsweise über einen Kupplungskopf-Sensor erkannt werden, ob das Zugfahrzeug mit einem Anhänger gekoppelt ist oder nicht. Ohne Anhänger kann über die Steuereinrichtung das elektrische Signal auf Null gesetzt werden, so dass das Druckregelmodul nicht mit einem elektrischen Steuersignal beaufschlagt wird, obwohl eine Betätigung des Bremsbetätigungsorgans erfolgt. Auch eine Veränderung der Höhe des elektrischen Bremssignals, also eine Abschwächung oder eine Verstärkung desselben, nach Maßgabe anderer Betriebsparameter ist durchaus möglich. Über die elektrische Beaufschlagung durch das Druckregelmodul kann ein unmittelbares Ansprechverhalten erzielt werden. Die Möglichkeiten für eine Gestaltung des Druckaufbaus sind hierbei vielfältig. Beispielsweise kann durch geeignete Beeinflussung des elektrischen Signals durch eine Steuereinrichtung für ein Befüllen der Bremseinrichtung des Anhängers zunächst das elektrische Steuersignal des Druckregelmoduls vergrößert werden, um große Volumenströme zu erzeugen, die ein schnelles Befüllen gewährleisten. Nach einer derartigen Befüllungsphase kann dann das elektrische Signal wieder auf ein "normales Maß" gemindert werden.

Kumulativ oder redundant ist erfindungsgemäß zusätzlich zu dem elektro-pneumatischen Beaufschlagungspfad ein hydraulisch-pneumatischer Beaufschlagungspfad für die Bremseinrichtung des Anhängers vorgesehen. In diesem hydraulisch-pneumatischen Beaufschlagungspfad wird der Hydraulikdruck einem Anhängersteuerventil zugeführt. Mittels des Anhängersteuerventils ist nach Maßgabe des zugeführten Hydraulikdrucks ein pneumatischer Ausgangsdruck aussteuerbar, der (in Teilbetriebsbereichen oder Notfällen) zur Erzeugung eines pneumatischen Bremsdrucks für den Anhänger Einsatz findet. Damit kann alternativ der pneumatische Ausgangsdruck des elektro-pneumatischen Beaufschlagungspfads oder des hydraulisch-pneumatischen Beaufschlagungspfad dem Kupplungskopf Bremse des Zugfahrzeugs zugeführt werden. Hierbei wird erfindungsgemäß der pneumatische Ausgangsdruck des Anhängersteuerventils einem Steuereingang des Druckregelmoduls zugeführt.

Während grundsätzlich vielfältige Möglichkeiten einer Verknüpfung der beiden Beaufschlagungspfade oder einer alternativen Nutzung der beiden Beaufschlagungspfade nach unterschiedlichen Betriebs- oder Umgebungskriterien bestehen, ist gemäß einer weiteren Ausgestaltung der Erfindung eine Steuereinrichtung oder eine Umschalteinrichtung vorgesehen, welche dafür verantwortlich ist zu entscheiden, über welchen Beaufschlagungspfad der pneumatische Ausgangsdruck ausgesteuert wird, der zur Erzeugung eines pneumatischen Bremsdrucks für den Anhänger Einsatz findet, der also unmittelbar oder mittelbar zu dem Kupplungskopf Bremse des Zugfahrzeugs weitergegeben wird. Hierbei nimmt die Steuereinrichtung oder Umschalteinrichtung eine Priorisierung derart vor, dass die Nutzung des elektro-pneumatischen Beaufschlagungspfads infolge der zuvor erläuterten erweiterten Möglichkeiten, die dieser Beaufschlagungspfad bereitstellt, vorrangig oder mit höherer Priorisierung erfolgt. Beispielsweise kann die Steuereinrichtung ein geeignetes Ausgangssignal erzeugen zur Ansteuerung eines Ventils, welches selektiv einen der beiden Beaufschlagungspfade mit dem Kupplungskopf Bremse verbinden kann.

Für eine besondere Ausführungsform der Erfindung ist die Umschalteinrichtung oder Steuereinrichtung in dem Druckregelmodul vorgesehen, wodurch sich eine besonders kompakte Anordnung ergibt. In diesem Fall wird dem Druckregelmodul sowohl das elektrische Signal als auch der pneumatische Ausgangsdruck des Anhängersteuerventils zugeführt. Die Umschalteinrichtung oder Steuereinrichtung entscheidet dann, ob der pneumatische Ausgangsdruck über den elektro-pneumatischen Beaufschlagungspfad oder den hydraulisch-pneumatischen Beaufschlagungspfad oder den hydraulisch pneumatischen Beaufschlagungspfad erzeugt wird unter Vornahme einer geeigneten Priorisierung.

Für die Gestaltung der Priorisierung gibt es vielfältige Möglichkeiten:

Gemäß einer ersten Ausgestaltung besteht die Priorisierung darin, dass in einem Normalbetrieb der elektro-pneumatische Beaufschlagungspfad benutzt wird, in dem die zuvor erläuterten Vorteile genutzt werden können. Lediglich in einem Notbetrieb, in dem eine Beeinträchtigung des elektro-pneumatischen Beaufschlagungspfads gegeben ist oder zumindest zu befürchten ist, wird der hydraulisch-pneumatische Beaufschlagungspfad genutzt, der damit eine Art Rückfallebene darstellt. Zu diesem Zweck kann über die Steuereinrichtung eine Prüffunktion durchgeführt werden, in welcher aus dem Beaufschlagungspfad abgeleitete Signale, beispielsweise das elektrische Signal oder der pneumatische Ausgangsdruck dieses Beaufschlagungspfads, auf Plausibilität überprüft werden. Dies kann insbesondere darin bestehen, zu überprüfen, ob bei Betätigung des Betätigungsorgans oder Erzeugung eines hydraulischen Drucks überhaupt ein elektrisches Signal von dem Messorgan geliefert wird. Ebenfalls kann eine Korrelation des elektrischen Signals des Messorgans mit dem erzeugten pneumatischen Ausgangsdruck erfolgen und auf Plausibilität überprüft werden. Im einfachsten Fall kann zwischen einem Normalbetrieb und einem Notbetrieb allein auf Grundlage einer Überprüfung erfolgen, ob überhaupt eine elektrische Leistungsversorgung in dem Zugfahrzeug gegeben ist. Es ist darauf hinzuweisen, dass die vorgenannte Priorisierung nicht nur durch eine elektronische Steuereinrichtung erfolgen kann. Vielmehr können für die Priorisierung elektrisch betätigte, aber auch federbelastete Ventile Einsatz finden, welche für ein Versagen des elektrischen Teils des Beaufschlagungspfads über die Feder in eine Schaltstellung verbracht werden, in welcher der hydraulisch-pneumatische Beaufschlagungspfad genutzt wird.

Für eine zweite Variante der Priorisierung erfolgt eine Umschaltung zwischen den beiden Beaufschlagungspfaden unter Umständen während unterschiedlicher Bremsvorgänge oder sogar während eines einzigen Bremsvorgangs. Hierbei wird für eine Betätigung des Bremsbetätigungsorgans zunächst, also am Beginn der Bremsbetätigung, der elektro-pneumatische Beaufschlagungspfad genutzt, so dass die erläuterte schnelle Beeinflussung der pneumatischen Bremsdruckkennlinie erfolgen kann. Nach einer Zeitspanne der Betätigung des Bremsbetätigungsorgans oder nach einem hinreichenden Anstieg eines pneumatischen Bremsdrucks kann dann der hydraulisch-pneumatische Beaufschlagungspfad genutzt werden. Hierbei kann beispielsweise bereits über den elektro-pneumatischen Beaufschlagungspfad eine Teilbremsung erfolgen. Ebenfalls denkbar ist, dass über den elektro-pneumatischen Beaufschlagungspfad lediglich ein Leerhub überwunden wird und eine erste Bewegung in der pneumatischen Bremse des Anhängers erzeugt wird, so dass es beispielsweise zu einer Art "Anlegen" der Bremse kommt, während hieran anschließend unmittelbar der hydraulisch-pneumatische Beaufschlagungspfad genutzt werden kann.

Gemäß einer weiteren vorteilhaften Ausgestaltung der Erfindung wird dem Anhängersteuerventil Druckluft aus einer Druckluftquelle, insbesondere einem Behälter, über ein Be- und Entlüftungsventil zugeführt. Das Be- und Entlüftungsventil wird für eine Nutzung des elektro-pneumatischen Beaufschlagungspfads in eine Entlüftungsstellung gesteuert. Hingegen wird dieses für eine Nutzung des hydraulisch-pneumatischen Beaufschlagungspfads in eine Belüftungsstellung gesteuert. Dies hat zur Folge, dass dem Anhängersteuerventil lediglich dann Druckluft zugeführt wird, wenn diese tatsächlich auch verarbeitet wird, indem der hydraulisch-pneumatische Beaufschlagungspfad benutzt wird. Hierdurch kann eine Reduzierung des Druckluftverbrauchs herbeigeführt werden. Es versteht sich, dass das Be- und Entlüftungsventil auch in das Anhängersteuerventil selbst integriert sein kann. Auch eine Aufnahme sowohl des Anhängersteuerventils als auch des Druckregelmoduls in einem gesamten Modul oder einer Einheit ist durchaus möglich (was für sämtliche Ausführungsformen der Erfindung gilt).

In weiterer Ausgestaltung der Erfindung besitzt die Bremseinrichtung ein Wechselventil. Ein erster Eingang des Wechselventils ist mit einem Ausgang des Anhängersteuerventils gekoppelt. Hingegen ist ein zweiter Eingang des Wechselventils mit dem Ausgang des Druckregelventils gekoppelt. Der Ausgang des Wechselventils ist mit einem Kupplungskopf Bremse für den Anhänger gekoppelt. Durch das Wechselventil kann auf einfache und kostengünstige Weise gewährleistet werden, dass der Kupplungskopf für den Anhänger mit dem Beaufschlagungspfad gekoppelt ist, welcher den höheren pneumatischen Ausgangsdruck zur Verfügung stellt. Möglich ist, dass damit je nach Gestaltung der Kennlinien für die beiden Beaufschlagungspfade das Wechselventil eine Art Umschalteinrichtung darstellt, über die die zuvor erläuterte Priorisierung erfolgt: Erzeugt beispielsweise der elektro-pneumatische Beaufschlagungspfad für den Beginn der Bremsbetätigung hohe pneumatische Ausgangsdrücke, leitet das Wechselventil diese zu dem Kupplungskopf Bremse durch. Erfolgt zeitlich verzögert der Aufbau größerer pneumatischer Ausgangsdrücke durch den hydraulisch-pneumatischen Beaufschlagungspfad, erfolgt eine Umschaltung des Wechselventils, so dass von diesem Beaufschlagungspfad der pneumatische Ausgangsdruck zu dem Kupplungskopf Bremse geleitet wird.

Ein weiterer Vorschlag der Erfindung integriert ein Handbremsventil in die zuvor spezifizierte Bremseinrichtung. Hierbei wird dem Druckregelventil ein Betätigungssignal des Handbremsventils zugeführt. Bei dem Betätigungssignal kann es sich um einen pneumatischen oder hydraulischen Ausgangsdruck handeln, der von dem Handbremsventil geschaltet wird. Alternativ oder kumulativ kann es sich bei dem Betätigungssignal um ein elektrisches Signal handeln, welches nach Maßgabe der Betätigung des Handbremsventils erzeugt wird.

Gemäß einem weiteren Vorschlag der Erfindung ist eine in dem Druckregelventil vorgesehene Steuereinrichtung einerseits zur Gewährleistung der zuvor erläuterten Funktionen eingesetzt. Darüber hinaus erfolgt eine multifunktionale Nutzung der Steuereinrichtung. Beispielsweise kann über diese ein einem Kompressor nachgeschaltetes Druckregelventil zur Regelung der Befüllung eines Behälters, zur Steuerung des Betriebs des Kompressors selbst, zur Regelung einer ABS- oder EBS-Bremsung, zur Ansteuerung einer Luftfederung oder anderer Nebenverbraucher u. ä. genutzt werden.

Für Nutzfahrzeuge geht aus WO 95/32116 die Nutzung eines elektro-pneumatischen Beaufschlagungspfads für eine Betriebsbremse hervor. Während die zuvor erläuterten Ausführungsformen erstmals die Nutzung eines derartigen elektro-pneumatischen Beaufschlagungspfads für die Erzeugung eines Bremsdrucks für einen Anhänger nutzt, überträgt ein weiterer Vorschlag der Erfindung diesen Grundgedanken auf ein Sondergebiet von Fahrzeugen, in welchen die Nutzung eines derartigen elektro-pneumatischen Beaufschlagungspfads einer Bremse überhaupt noch nicht bekannt war: Gemäß diesem Vorschlag der Erfindung findet eine Bremseinrichtung der zuvor erläuterten Art Verwendung für ein landwirtschaftliches Fahrzeug, insbesondere einen Traktor, welches mit einem Anhänger koppelbar ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine hydraulische Bremseinrichtung eines Zugfahrzeugs mit Anhängersteuerventil gemäß dem Stand der Technik.
- **Fig. 2**: zeigt Bremsdruckkennlinien mit einem pneumatischen Ausgangsdruck als Funktion einer Betätigung eines Bremsbetätigungsorgans oder eines Hydraulikdrucks.
- **Fig.3**: zeigt Bremskennlinien mit einer Bremsbeschleunigung als Funktion eines Pneumatikdrucks an dem Kupplungskopf Bremse.
- **Fig.4**: zeigt schematisch eine erfindungsgemäße Bremseinrichtung mit elektro- pneumatischem sowie hydraulisch-pneumatischem Beaufschlagungspfad und elektrisch angesteuertem Be- und Entlüftungsventil zur Druckluft- beaufschlagung eines Anhängersteuerventils.
- **Fig.5**: zeigt schematisch eine erfindungsgemäße Bremseinrichtung im Wesentlichen entsprechend Fig. 4 mit ergänzendem Wechselventil und Handbremsventil.
- **Fig. 6**: zeigt eine nicht, erfindungsgemäße Bremseinrichtung mit ausschließlichem elektro- pneumatischen Beaufschlagungspfad für Betriebsbremsungen und zusätzlicher Handbremsfunktion.
- **Fig.7**: zeigt schematisch eine nicht erfindungsgemäße Bremseinrichtung mit aus- schließlich elektro-pneumatischem Beaufschlagungspfad mit Ableitung eines elektrischen Betätigungssignals aus einem Bremslichtschalter.
- **Fig.8**: zeigt eine schematische Skizze eines im Rahmen der vorliegenden Erfindung einsetzbaren Druckregelmoduls.
- **Fig.9**: zeigt schematisch eine erfindungsgemäße Bremseinrichtung ohne hydraulisch-pneumatischen Beaufschlagungspfad für den Anhänger, aber unter Einbindung eines Hydraulikkreislaufes.
- **Fig.10**: zeigt eine erfindungsgemäße Bremseinrichtung mit hydraulisch-pneu- matischem und elektro-pneumatischem Beaufschlagungspfad bei Integration des Druckregelmoduls und des Anhängersteuerventils in eine gemeinsame Einheit.
- **Fig. 11**: zeigt schematisch eine erfindungsgemäße Bremseinrichtung mit einer Fig. 10 entsprechenden Einheit, deren hydraulischem Eingang ein elektrisch angesteuertes Sperrventil vorgeordnet ist.

### FIGURENBESCHREIBUNG

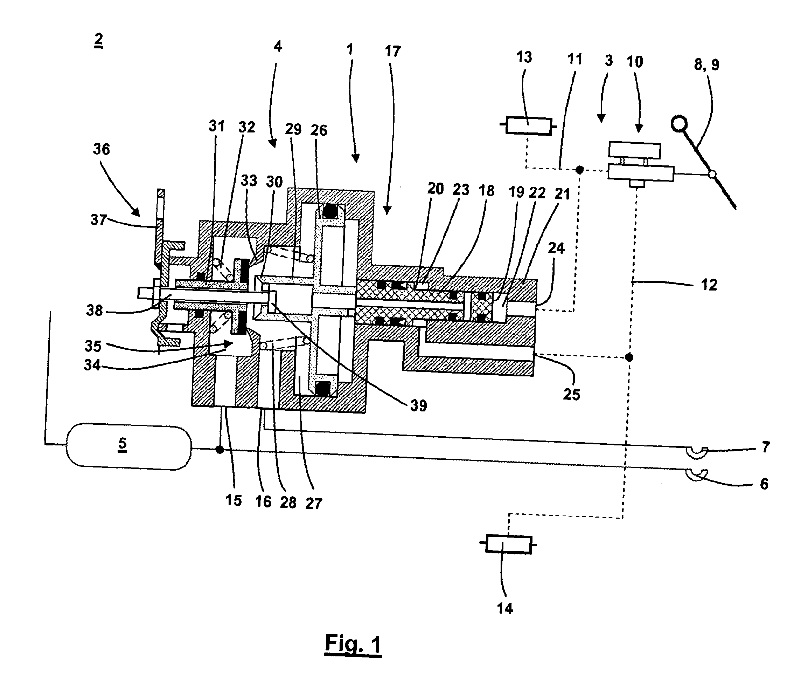

**Fig. 1** zeigt eine Bremseinrichtung 1 eines Zugfahrzeugs 2, die eine hydraulische Betriebsbremseinrichtung 3, ein Anhängersteuerventil 4, einen in nicht dargestellter Weise mit Druckluft versorgten Druckluftbehälter 5 sowie einen Kupplungskopf Vorrat 6 und einen Kupplungskopf Bremse 7, die eine pneumatische Kopplung des Zugfahrzeugs 2 mit einem Anhänger ermöglichen, besitzt.

Für das in Fig. 1 dargestellte Ausführungsbeispiel ist die hydraulische Betriebsbremseinrichtung 3 zweikreisig ausgebildet. In dieser ist die Betätigung eines Bremsbetätigungsorgans 8, hier ein Bremspedal 9, durch den Fahrer mechanisch mit der Bewegung eines (Haupt-) Bremszylinders 10 gekoppelt, der einen Hydraulikdruck in den Bremsleitungen 11, 12 der beiden Kreise erzeugt. Die Bremsleitungen 11, 12 sind jeweils mit mehreren Betriebsbremszylindern 13, 14 des Zugfahrzeugs 2 verbunden.

Der Druckluftbehälter 5 ist einerseits mit dem Kupplungskopf Vorrat 6 verbunden und andererseits über das Anhängersteuerventil 4 mit dem Kupplungskopf Bremse 7 verbunden, wobei ein pneumatischer Eingang 15 des Anhängersteuerventils 4 mit dem Druckluftbehälter 5 verbunden ist, während ein pneumatischer Ausgangsdruck des Anhängersteuerventils 4 über einen pneumatischen Ausgang 16 dem Kupplungskopf Bremse 7 zugeführt wird.

Das Anhängersteuerventil 4 dient dazu, entsprechend der hydraulischen Beaufschlagung der hydraulischen Betriebsbremseinrichtung 3, hier entsprechend dem Druck in den Bremsleitungen 11, 12, einen pneumatischen Ausgangsdruck 16 zu erzeugen, mit dem über den Kupplungskopf 7 eine pneumatische Bremseinrichtung eines ggf. mit den Kupplungsköpfen 6, 7 gekoppelten Anhängers zu beaufschlagen. Die eingesetzten Bauelemente zur Umwandlung des hydraulischen Drucks in einen pneumatischen Ausgangsdruck werden im Folgenden als hydraulisch-pneumatischer Beaufschlagungspfad 17 bezeichnet.

Das Anhängersteuerventil 4 besitzt einen abgestuften Relaiskolben 18 mit einer durch eine Stirnseite gebildeten ersten Kolbenfläche 19 sowie einer durch die Abstufung gebildeten, kreisringförmigen zweiten Kolbenfläche 20. Der Relaiskolben 18 ist in einer entsprechenden abgestuften Bohrung eines Gehäuses 21 des Anhängersteuerventils 4 unter radialer Abdichtung und Ermöglichung einer axialen Gleitbewegung aufgenommen. Die Kolbenfläche 19 bildet mit dem Gehäuse 21 eine erste Steuerkammer 22, während die zweite Kolbenfläche 20 mit dem Gehäuse eine zweite Steuerkammer 23 bildet. Die Steuerkammern 22, 23 sind hydraulisch mit der hydraulischen Betriebsbremseinrichtung 3 verbunden, hier durch Verbindung der Steuerkammer 22 mit der Bremsleitung 11 über einen hydraulischen Eingang 24 des Anhängersteuerventils 4 sowie eine Verbindung der Steuerkammer 23 mit der Bremsleitung 12 über einen hydraulischen Eingang 25 des Anhängersteuerventils 4. Der Relaiskolben 18 stützt sich mit seiner der Steuerkammer 22 gegenüberliegenden Stirnseite an einem Wiegekolben 26 ab, der radial gegenüber dem Gehäuse 21 abgedichtet ist und auf der dem Relaiskolben 18 abgewandten Seite eine Wiegekammer 27 begrenzt. Der Wiegekolben 26 ist in der Wiegekammer 27 über eine vorgespannte Druckfeder 28 abgestützt, die mit zunehmender Druckbeaufschlagung der Steuerkammern 22, 23 zunehmend beaufschlagt wird. Der Wiegekolben 26 besitzt einen die Wiegekammer 27 durchsetzenden hülsenartigen Fortsatz 29, dessen Stirnseite einen Auslassventilkörper 30 bildet. Koaxial zu dem Relaiskolben 18 und dem Wiegekolben 26 ist auf der dem Relaiskolben 18 abgewandten Seite des Wiegekolbens 28 ein Doppelventilkörper 31 verschieblich gelagert und gegen eine Bewegung in Fig. 1 nach links unter Vorspannung über eine Druckfeder 32 abgestützt. Das Gehäuse 21 bildet einen Einlassventilkörper 33, an welchen über die Druckfeder 32 der Doppelventilkörper 31 in Fig. 1 nach rechts angepresst wird. In dieser Schaltstellung trennt ein mit dem Einlassventilkörper 33 und dem Doppelventilkörper 31 gebildetes Einlassventil eine Einlasskammer 34, in welche der Eingang 15 mündet, von der Wiegekammer 22, die pneumatisch mit dem Ausgang 16 verbunden ist, so dass keine Druckluft von dem Druckluftbehälter 5 zu dem Kupplungskopf Bremse 7 gelangen kann. Fig. 1 zeigt das Anhängersteuerventil 4 ohne hinreichende Beaufschlagung der Steuerkammern 22, 23. Infolge der Wirkung der Druckfeder 28 ist der Wiegekolben 26 nach rechts gedrückt an einen Anschlag des Gehäuses. Dies hat zur Folge, dass der Auslassventilkörper 30 beabstandet von dem Doppelventilkörper 31 angeordnet ist, dessen zugewandte Stirnseite einen Auslassventilsitz bildet. Über das derart gebildete Auslassventil ist für die dargestellte Stellung die Wiegekammer 27 verbunden mit der Innenbohrung des Wiegekolbens 26, die auf nicht dargestellte Weise entlüftet ist. Mit einem Anstieg des hydraulischen Drucks in mindestens einer Steuerkammer 22, 23 drückt der Relaiskolben 18 den Wiegekolben 26 nach links, bis dieser zur Anlage an den Doppelventilkörper 31 kommt, womit das Auslassventil geschlossen ist. Mit weiterer Druckerhöhung in den Steuerkammern 22, 23 drücken Relaiskolben 18 und Wiegekolben 26 über die dicht geschlossene Kontaktfläche mit dem Auslassventilkörper 30 den Doppelventilkörper 31 nach links, so dass sich der Doppelventilkörper 31 von dem Einlassventilsitz 33 entfernt und das Einlassventil geöffnet wird. Somit kann Druckluft von dem Eingang 15 über die Einlasskammer 34 und das Einlassventil zu der Wiegekammer 27 und dem Auslass 16 strömen. Mit zunehmendem Druckaufbau in der Bremse des Anhängers, also auch zunehmendem Druck in der Wiegekammer 27, steigt die Beaufschlagung des Wiegekolbens 26 nach rechts, bis die Summe der durch die Druckfedern 28, 32 hervorgerufenen Kräfte und der pneumatisch durch die Druckbeaufschlagung der Wiegekammer 27 hervorgerufene Kraft an dem Wiegekolben 26 die Kraft, die hydraulisch an den Kolbenflächen 19, 20 erzeugt wird, überschreitet. Mit dem Überschreiten erfolgt eine automatische Verschiebung des Doppelventilkörpers 31, des Wiegekolbens 26 und des Relaiskolbens 18 nach rechts bis zur Schließung des Einlassventils. Damit erzeugt das Anhängersteuerventil 4 auf automatische Weise einen pneumatischen Ausgangsdruck an dem Ausgang 16, welcher mit der hydraulischen Beaufschlagung der Bremsleitungen 11, 12 korreliert. Mit dem Auslassventilkörper 30, dem Doppelventilkörper 31, der einerseits einen Ventilsitz für den Auslassventilkörper 30 bildet und andererseits einen Ventilkörper für den Einlassventilsitz 33 bildet, und dem Einlassventilsitz 33 ist ein Ein-/Auslassventil 34 gebildet.

Weiterhin besitzt das Anhängersteuerventil 4 für die dargestellte Ausführungsvariante ein Handbetätigungsorgan 36, über welches eine mechanische Betätigung der Bremse des Anhängers herbeigeführt werden kann. Für das dargestellte Ausführungsbeispiel ist das Handbetätigungsorgan 36 mit einem verschwenkbar gegenüber dem Gehäuse 21 gelagerten Handhebel 37 ausgebildet. Mit dem Handhebel 37 wird eine Welle 38 verdreht, die den Doppelventilköper 31 durchsetzt und sich in das Innere des Fortsatzes 29 erstreckt. In dem innen liegenden Endbereich besitzt die Welle 37 einen Hammerkopf 39, der sich auf der einen Seite auf einer Rippe des Fortsatzes 29 abstützt. Der Handhebel 37 bildet um das Gehäuse des Anhängersteuerventils 4 eine topfartige Form, die sich auf einer nockenartigen Erhebung des Gehäuses des Anhängersteuerventils 4 abstützt, so dass bei Verdrehung des Handhebels 37 dieser mitsamt der Welle 38 und dem Hammerkopf 39 eine Axialverschiebung des Fortsatzes 29, und damit des Wiegekolbens 26 und - nach Überwindung eines etwaigen Spalts - des Doppelventilkörpers 31 zur Folge hat. Auf diese Weise kann somit manuell das Ein-/Auslassventil 35 in seine Einlass- und Auslassstellung gesteuert werden. Um die vorgenannte Bewegung auch unabhängig von einer Stellung des Relaiskolbens 18 zu ermöglichen, sind Relaiskolben 18 und Wiegekolben 26 nicht starr miteinander verbunden, sondern liegen lediglich stirnseitig aneinander an.

Ergänzende Merkmale sowie weitere Ausgestaltungsmöglichkeiten für ein derartiges, an sich aus dem Stand der Technik bekanntes Anhängersteuerventil 4 sind beispielsweise den Druckschriften DE 33 38 690 A1 und DE 39 18 226 A1 zu entnehmen.

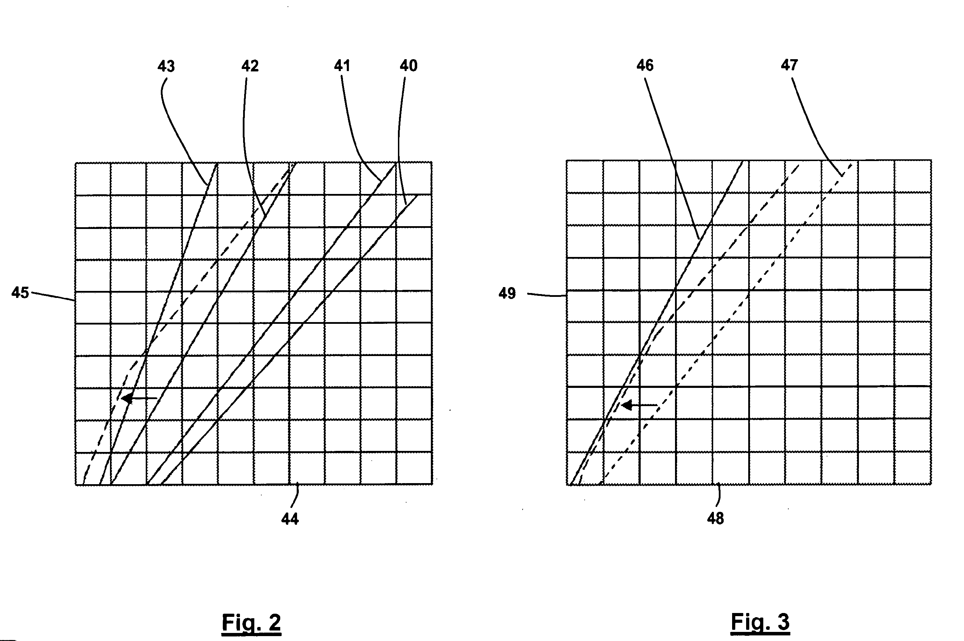

**Fig. 2** zeigt unterschiedliche Bremsdruckkennlinien 40-43 für bekannte Anhängersteuerventile 4, wobei die Abszisse 44 den eingesteuerten hydraulischen Druck der hydraulischen Betriebsbremseinrichtung 3, also der Bremsleitungen 11, 12 zeigt, während die Ordinate 45 den ausgesteuerten pneumatischen Druck am Ausgang 16 zeigt. Die unterschiedlichen Bremsdruckkennlinien 40-43 können aus unterschiedlichen konstruktiven Ausgestaltungen mit unterschiedlichen Auslegungen oder aber aus einer einstellbaren Bremsdruckkennlinie durch Beaufschlagung des Relaiskolbens 18 mit einer Feder mit einstellbarer Vorspannung gemäß DE 39 18 226 A1 resultieren.

**Fig. 3** zeigt eine Bremskennlinie 46 für das Zugfahrzeug sowie eine Bremskennlinie 47 für den Anhänger, wobei hier die Abszisse 48 den pneumatischen Ausgangsdruck am Ausgang 16 zeigt, während die Ordinate 49 die Abbremsung zeigt. Aus Fig. 3 ist ersichtlich, dass mit dem Aufbau des pneumatischen Ausgangsdrucks bereits das Zugfahrzeug abgebremst wird, während eine Abbremsung des Anhängers erst zeitlich verzögert initiiert wird.

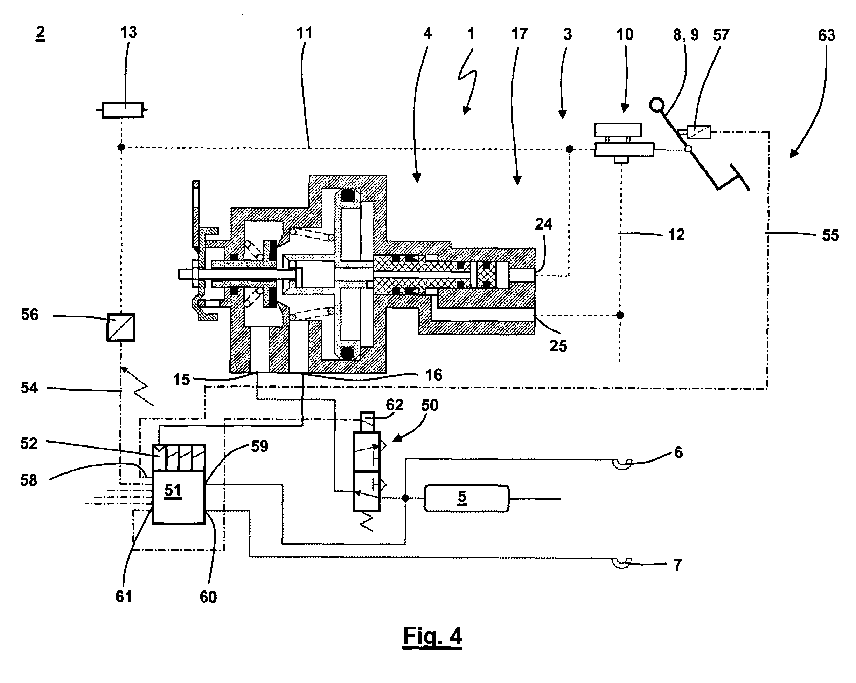

Für das erfindungsgemäße Ausführungsbeispiel der Bremseinrichtung 1 gemäß **Fig. 4** findet ein Anhängersteuerventil 4 entsprechend dem Anhängersteuerventil gemäß Fig. 1 Einsatz, dessen Eingänge 24, 25 entsprechend Fig. 1 mit der hydraulischen Betriebsbremseinrichtung 3 gekoppelt sind. Allerdings ist der Eingang 15 in diesem Fall über ein elektrisch steuerbares Beund Entlüftungsventil 50 mit dem Druckluftbehälter 5 gekoppelt. Weiterhin ist der pneumatische Ausgang 16 nicht unmittelbar mit dem Kupplungskopf Bremse 7 verbunden, sondern unter Zwischenschaltung eines Druckregelmoduls 51. Für das dargestellte Ausführungsbeispiel ist der Ausgang 16 mit einem pneumatischen Steuereingang 52 des Druckregelmoduls 51 verbunden. Das Druckregelmodul 51 besitzt eine Steuereinrichtung 53. Der Steuereinrichtung 53 werden elektrische Signale 54, 55 über Signalleitungen zugeführt, welche mit der Betätigung des Bremsbetätigungsorgans 8 korrelieren oder dieser entsprechen. Hier ist das Signal 54 das Ausgangssignal eines als Druck-Spannungs-Wandler ausgebildeten Messorgans 56, welches den hydraulischen Druck in der Bremsleitung 11 oder einem Betriebsbremszylinder 13 erfasst. Das elektrische Signal 55 ist das Ausgangssignal eines als Weg- oder Winkelsensor ausgebildeten Messorgans 57, welches die Bewegung des Bremspedals 9 erfasst. Die elektrischen Signale 54, 55 werden dem Druckregelmodul 51 über elektrische Anschlüsse 58, ein geeignetes Interface oder einen hiermit gekoppelten Datenbus zugeführt. Weiterhin besitzt das Druckregelmodul 51 einen pneumatischen Eingang 59, der aus dem Druckluftbehälter 5 mit Druckluft versorgt wird, sowie einen Ausgang 60, der pneumatisch mit dem Kupplungskopf Bremse 7 gekoppelt ist, hier durch eine unmittelbare Leitungsverbindung. Das Druckregelmodul 51 ermöglicht zwei unterschiedliche Beaufschlagungspfade für die Bereitstellung des pneumatischen Ausgangsdrucks an dem Kupplungskopf Bremse 7:
- Für einen ersten, elektro-pneumatischen Beaufschlagungspfad 63 berücksichtigt das Druckregelmodul 51 alternativ oder kumulativ die elektrischen Signale 54, 55. Nach Maßgabe des oder der elektrischen Signale 54, 55 steuert das Druckregelmodul 51 unter Nutzung des am Eingang 59 anliegenden Drucks aus dem Druckluftbehälter 5 an dem Ausgang 60 einen geeigneten pneumatischen Ausgangsdruck an, der unmittelbar oder mittelbar auf den Kupplungskopf Bremse 7 wirkt und von dort an die pneumatische Bremseinrichtung des Anhängers weitergegeben werden kann. Für diesen elektropneumatischen Beaufschlagungspfad erfolgt somit eine Signalübermittlung und Erzeugung des pneumatischen Ausgangsdrucks über die Kette
   - a): Bremsbetätigungsorgan 8, Messorgan 57, elektrisches Signal 55, Anschluss 58, aussteuemde, elektrisch betätigte Ventileinrichtung in dem Druckregelmodul 51 über Ausgang 60 zu dem Kupplungskopf Bremse 7
   und/oder
   - b): Bremsbetätigungsorgan 8, Bremszylinder 10, Bremsleitung 11 (12), Messorgan 56, elektrisches Signal 54, Anschluss 58, elektrisch betätigte Ventileinrichtungen in dem Druckregelmodul 51 über Anschluss 60 zu dem Kupplungskopf Bremse 7.

Weiterhin kann der pneumatische Ausgangsdruck über einen hydraulisch-pneumatischen Beaufschlagungspfad erzeugt werden. In diesem wird entsprechend der für Fig. 1 beschriebenen Wirkungsweise des Anhängersteuerventils 4 der hydraulische Druck über das Anhängersteuerventil 4 in einen pneumatischen Ausgangsdruck 16 umgewandelt. Für das dargestellte Ausführungsbeispiel wird der an dem Ausgang 16 anliegende Druck als Steuerdruck oder Vorsteuerdruck für den Steuereingang 52 des Druckregelmoduls 51 verwendet, der über geeignete pneumatische Ventileinrichtungen genutzt wird, um aus dem am Eingang 59 anliegenden Druck des Druckluftbehälters 5 zu dem Ausgang 60 einen geeigneten pneumatischen Ausgangsdruck auszusteuern, welcher mit dem Druck an dem Ausgang 16 des Anhängersteuerventils 4 korreliert. Für den hydraulisch-pneumatischen Beaufschlagungspfad verläuft die Wirkkette somit über das Bremsbetätigungsorgan 8, den Bremszylinder 10, die Bremsleitungen 11, 12, die Eingänge 24, 25 des Anhängersteuerventils 4, das Anhängersteuerventil 4, Ausgang 16, Steuereingang 52 des Druckregelmoduls 51, pneumatische Bauelemente des Druckregelmoduls 51 über Ausgang 60 zu dem Kupplungskopf Bremse 7.

Das Druckregelmodul 51 besitzt einen Steuerausgang 61, über welchen die Steuereinrichtung 53 des Druckregelmoduls 51 andere elektrisch angesteuerte Bauelemente ansteuern kann. Im vorliegenden Fall steuert über den Steuerausgang 61 das Druckregelmodul 51 einen Steuereingang 62 des Be- und Entlüftungsventils 50 an. Das Be- und Entlüftungsventil 50 ist infolge seiner Beaufschlagung durch eine Feder als monostabiles Ventil ausgebildet mit einer monostabilen Belüftungsstellung. Beispielsweise handelt es sich bei dem Be- und Entlüftungsventil 50 wie dargestellt um ein 3/2-Wegeventil. Durch geeignete Bestromung des Steuereingangs 62 durch das Druckregelmodul 51 kann das Be- und Entlüftungsventil aus der monostabilen Belüftungsstellung in die in Fig. 4 nicht wirksame Entlüftungsstellung verbracht werden.

Für den Fall, dass der elektro-pneumatische Beaufschlagungspfad 63 genutzt werden soll, wird der Steuereingang 62 bestromt, so dass der pneumatische Eingang 15 des Anhängersteuerventils 4 infolge der Stellung des Be- und Entlüftungsventils 50 in der Entlüftungsstellung entlüftet ist. Trotz entsprechender Umschaltung des Ein-/Auslassventils des Anhängersteuerventils 4 infolge der hydraulischen Druckbeaufschlagung der Eingänge 24, 25 führt die Öffnung des Einlassventils nicht zu einer Druckbeaufschlagung des Steuereingangs 52 des Druckregelmoduls 51 und einer sukzessiven Entlüftung mit einer Verringerung des Hydraulikdrucks, was mit einem unnötigen Druckluftverbrauch verbunden wäre. In diesem Sinne kann eine Ansteuerung des Steuereingangs 62 des Be- und Entlüftungsventils 50 durch die Steuereinheit 53 des Druckregelmoduls 51 erfolgen. Fällt die elektrische Anlage vollständig aus, so dass eine Umschaltung auf den hydraulisch-pneumatischen Beaufschlagungspfad 17 erfolgen muss, bricht auch die elektrische Beaufschlagung des Steuereingangs 62 zusammen und das Be- und Entlüftungsventil 50 wird automatisch in die in Fig. 4 dargestellte monostabile Stellung verbracht, in der der Eingang 15 des Anhängersteuerventils 4 mit Druckluft beaufschlagt wird, was für die Wirksamkeit des hydraulisch-pneumatischen Betätigungspfads erforderlich ist.

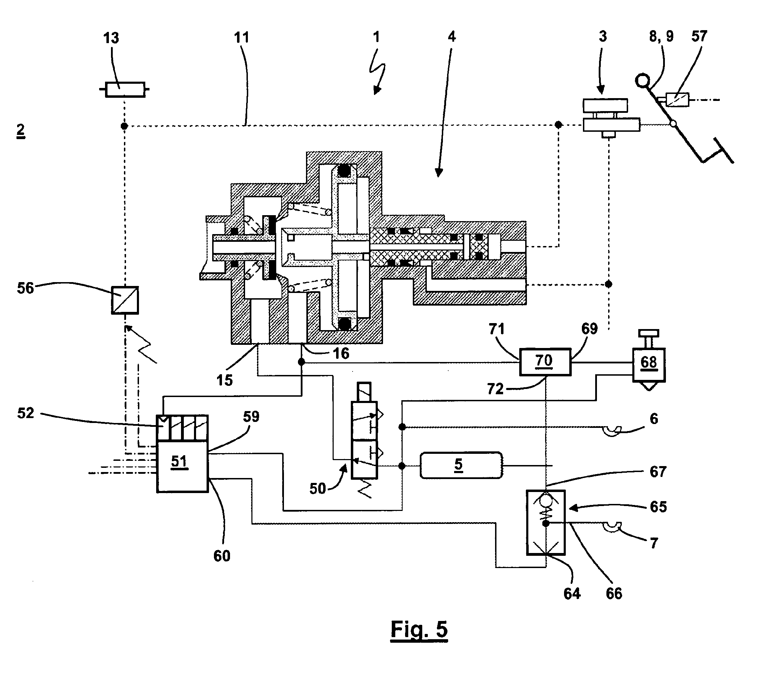

Für das Ausführungsbeispiel gemäß **Fig. 5** ist bei ansonsten Fig. 4 entsprechender Gestaltung der Ausgang 60 des Druckregelmoduls 51 mit einem Eingang 64 eines Wechselventils 65 verbunden, dessen Ausgang 66 mit dem Kupplungskopf Bremse 7 verbunden ist. Der andere Eingang 67 ist mit dem Ausgang 16 des Anhängersteuerventils 4 verbunden. Der Einsatz des Wechselventils kann unterschiedlichen Zwecken dienen:
- Das Wechselventil gibt automatisch den pneumatischen Ausgangsdruck weiter, der von dem Druck an dem Ausgang 60 und dem Ausgang 16 der größere ist. Damit stellt das Wechselventil 65 eine Umschalteinrichtung dar, über welche auf einfache Weise ein Vermeiden eines Nacheilens der Beaufschlagung der Druckluftbremse des Anhängers vermieden werden kann, wenn über das Wechselventil 65 die pneumatische Druckbeaufschlagung über den elektro-pneumatischen Beaufschlagungspfad sofort erfolgt und erst später eine Übergabe an den Ausgang des Anhängersteuerventils 4 erfolgt.
- Auch eine Priorisierung des elektro-pneumatischen Beaufschlagungspfads unter automatischer Umschaltung auf den hydraulisch-pneumatischen Beaufschlagungspfad bei einem zumindest teilweisen Ausfall des elektro-pneumatischen Beaufschlagungspfads oder einem vollständigen elektrischen Ausfall kann durch das Wechselventil 65 sehr einfach realisiert werden.
- Selbst für den Fall, dass sowohl eine Beaufschlagung über die elektrischen Signale 55, 54 als auch die Beaufschlagung des Steuereingangs 52 über das Anhängersteuerventil 4 nicht mehr erfolgt, beispielsweise weil das Druckregelmodul 51 einen mechanischen Schaden erlitten hat, für den insbesondere ein Relaiskolben nicht mehr verschieblich ist, kann immer noch ein Betrieb über die Verbindung des Ausgangs 16 mit dem Eingang 67 erfolgen.

Abweichend zu der direkten, möglichen Leitungsverbindung zwischen Ausgang 16 und Eingang 67 ist in Fig. 5 eine weitere optionale Ergänzung vorgenommen: Während für das Anhängersteuerventil das Handbetätigungsorgan 35 mit Welle 38 und Hammerkopf 39 entfallen ist, so dass dieses nicht manuell, sondern lediglich über die hydraulische Beaufschlagung betätigbar ist, ist gemäß Fig. 5 ein separates, manuell betätigbares Feststellbremsventil 68 vorgesehen, welches ebenfalls aus dem Druckluftbehälter 5 gespeist wird. Das Feststellbremsventil 68 besitzt eine Belüftungsstellung sowie eine Entlüftungsstellung. In der Belüftungsstellung leitet das Feststellbremsventil 68 Druckluft aus dem Druckluftbehälter 5 zu einem Eingang 69 eines Wechselventils 70, dessen anderer Eingang 71 mit dem Ausgang 16 des Anhängersteuerventils 4 verbunden ist, während der Ausgang 72 des Wechselventils 70 mit dem Eingang 67 des Wechselventils 65 verbunden ist.

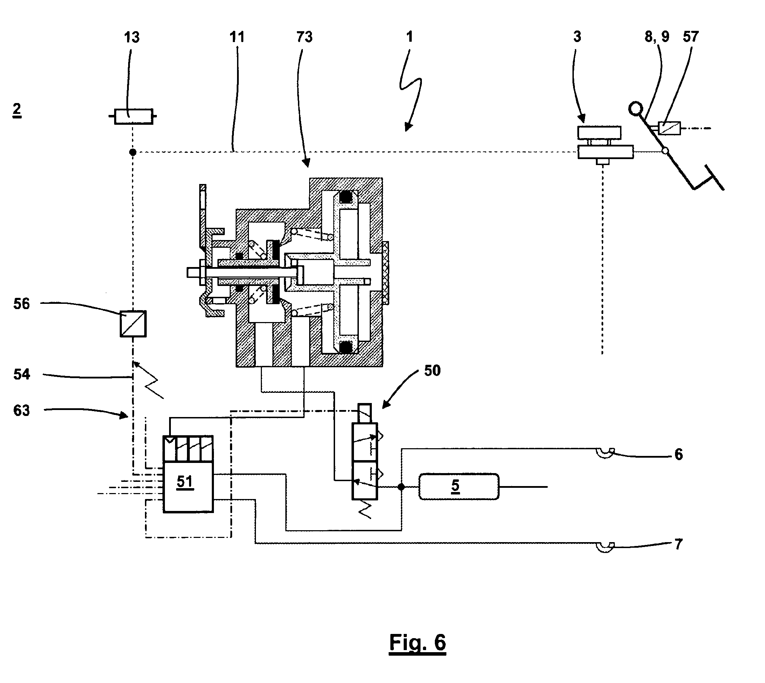

Für das nicht erfindungsgemäße Ausführungsbeispiel gemäß **Fig. 6** ist der hydraulisch-pneumatische Beaufschlagungspfad 17 für den normalen Fahrbetrieb vollständig entfallen, so dass lediglich der elektro-pneumatische Beaufschlagungspfad 63 vorgesehen ist. Durch Entfall des Relaiskolbens 18 und der hydraulischen Beaufschlagung über die hydraulischen Eingänge 24, 25 ist das Anhängersteuerventil 4, welches in Fig. 1 dargestellt und beschrieben worden ist, auf ein reines Handbremsventil 73 bei ansonsten Fig. 1 entsprechendem Aufbau reduziert. Eine Integration des Handbremsventils 73 erfolgt (unter Entfall der hydraulischen Beaufschlagung) über die Anschlüsse 24, 25 entsprechend Fig. 4.

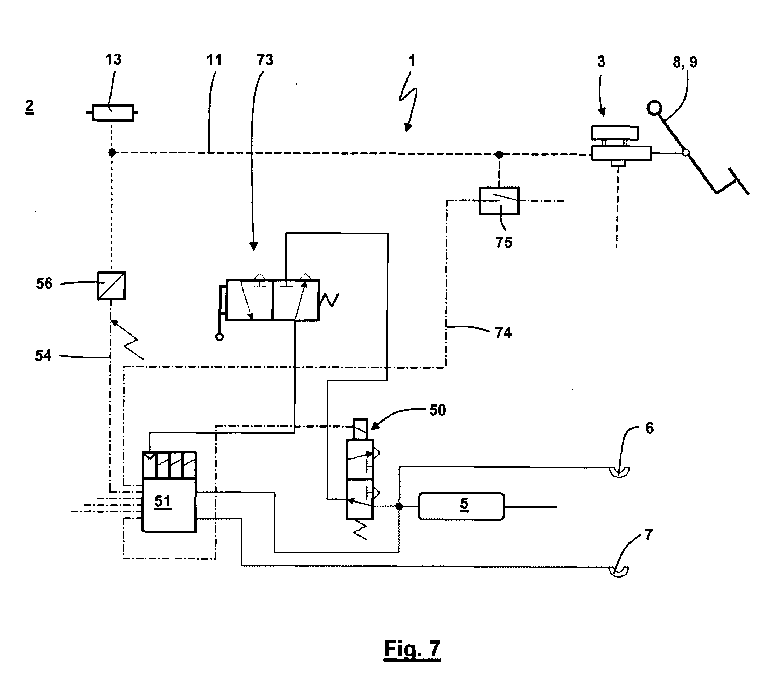

**Fig. 7** zeigt einen nicht erfindungsgemäßen Aufbau der Bremseinrichtung 1 im Wesentlichen entsprechend Fig. 6, wobei allerdings das Handbremsventil 73 lediglich schematisch als handbetätigtes 3/2-Wegeventil dargestellt ist. Für den elektro-pneumatischen Beaufschlagungspfad 63 wird weiterhin nicht (nur), wie in Fig. 6, das elektrische Signal 54 des Messorgans 56, welches den hydraulischen Druck in der Bremsleitung 11 erfasst, genutzt. Vielmehr wird ein elektrisches Signal 74 eines Bremslichtschalters 75 genutzt, welches dem Druckregelmodul 51 zugeführt wird. In diesem Fall kann das elektrische Signal 74 als binäres oder abgestuftes Signal ausgebildet sein.

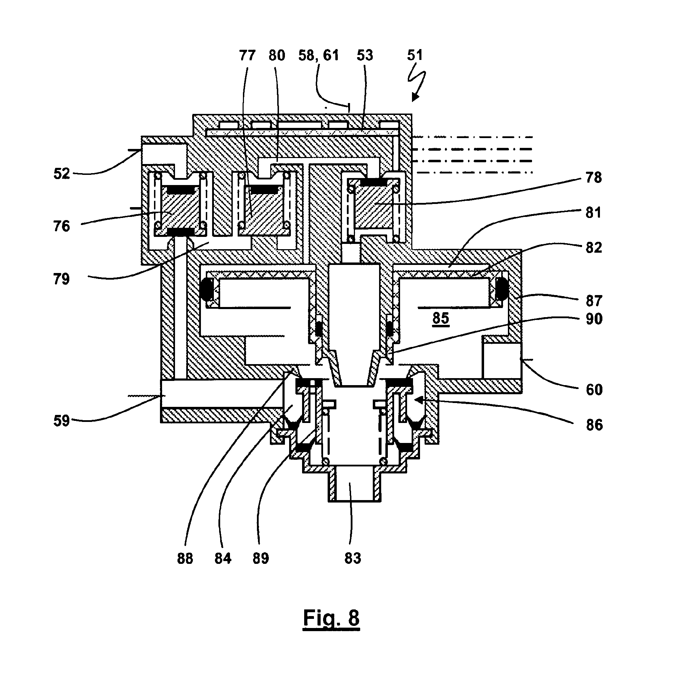

**Fig. 8** zeigt schematisch das Druckregelmodul 51 in größerem konstruktivem Detail. Das Druckregelmodul 51 besitzt in diesem Fall drei Magnetventile 76, 77, 78, welche ohne Bestromung infolge zugeordneter Federn in die in Fig. 8 skizzierten Stellungen bewegt sind. Das Magnetventil 76 verbindet selektiv entweder den Steuereingang 52 oder den Eingang 59 mit einem Durchlass 79. Der Durchlass 79 ist je nach Stellung des Magnetventils 77 gegenüber einem Durchlass 80 absperrbar oder mit diesem verbindbar. Der Durchlass 80 verzweigt einerseits zu einer Steuerkammer 81, über die ein Relaiskolben 82 beaufschlagt wird. Andererseits ist der Durchlass über das Magnetventil 78 gegenüber einer Entlüftung 83 absperrbar oder mit dieser verbindbar. Der Einlass 59 ist - neben der Verbindung mit dem Magnetventil 76 - mit einer Einlasskammer 84 verbunden. Auf der der Steuerkammer 81 abgewandten Seite begrenzt der Relaiskolben 82 eine Bremsdruckkammer 85, die mit dem mit dem Kupplungskopf Bremse 7 gekoppelten Ausgang 60 verbunden ist. In der in Fig. 8 dargestellten Schaltstellung eines Ein-/Auslassventils 86 verschließt ein Einlassventil, welches mit einem von dem Gehäuse 87 ausgebildeten Einlassventilsitz 88 und einem von einem Doppelventilkörper 89 gebildeten Ventilkörper gebildet ist, den Übertritt von der Einlasskammer 84 zur Bremsdruckkammer 85. Hingegen ist ohne hinreichende Druckbeaufschlagung der Steuerkammer 81 ein Auslassventil des Ein-/Auslassventils 86, welches mit einem von einem Fortsatz des Relaiskolbens 82 gebildeten Auslassventilkörper 90 sowie einem von dem Doppelventilkörper 89 gebildeten Ventilsitz gebildet ist, die Bremsdruckkammer 85 mit der Entlüftung 83. Mit Druckbeaufschlagung der Steuerkammer 81 bewegt sich in Fig. 8 der Relaiskolben 82 nach unten, bis der Auslassventilkörper 90 unter Abdichtung zur Anlage an den Doppelventilkörper 89 kommt, wodurch das Auslassventil des Ein-/Auslassventils 86 geschlossen wird. Weitere Druckerhöhung in der Steuerkammer 81 führt zu weiterer Bewegung des Relaiskolbens 82 nach unten. Der Auslassventilkörper 90 drückt damit auch den Doppelventilkörper 89 weiter nach unten, so dass sich der Doppelventilkörper 89 von dem Einlassventilsitz 88 entfernt und das Einlassventil des Ein-/Auslassventils 86 geöffnet wird. Damit kann Druckluft von dem Anschluss 59 über die Einlasskammer 84 und das Einlassventil zu der Bremsdruckkammer 85 überströmen und von dort über den Ausgang 60 zu dem Kupplungskopf Bremse 7 gelangen. Somit ist je nach den Druckverhältnissen in der Steuerkammer 81 eine Entlüftung des Kupplungskopfes Bremse 7 möglich oder eine gezielte Belüftung desselben. Für den Fall, dass der Relaiskolben 82, entsprechend dem Stand der Technik gemäß DE 39 18 226 A1 als "Wiegekolben" ausgebildet ist, stellt sich automatisch an dem Ausgang 60 ein Druck ein, welcher mit dem Druck in der Steuerkammer 81 korreliert.

Für die Druckbeaufschlagung der Steuerkammer 81 gibt es zwei Möglichkeiten:
- Für den elektro-pneumatischen Beaufschlagungspfad werden der Steuereinrichtung 53 elektrische Signale 54, 55 und/oder 74 zugeführt. Ermittelt die Steuereinrichtung 53 aus diesen Signalen, dass ein Bremsdruck an dem Ausgang 60 ausgesteuert werden soll zur Betätigung der Bremse des Anhängers, wird das Magnetventil 76 aus der in Fig. 8 dargestellten Stellung verbracht, so dass der Anschluss 52 abgesperrt wird und ein Übertritt von Druckluft von dem Eingang 59 zu dem Durchlass 79 ermöglicht ist. Ohne Bestromung des Magnetventils 77 gelangt die Druckluft von dem Durchlass 79 zu dem Durchlass 80, von wo eine Beaufschlagung der Steuerkammer 81 erfolgen kann, die für hinreichenden Druckaufbau zur Öffnung des Einlassventils des Ein-/Auslassventils 86 führt, so dass Druckluft von dem Eingang 59 zu dem Ausgang 60 strömen kann zwecks Beaufschlagung der Bremse des Anhängers. Wird dann erkannt, dass der pneumatische Ausgangsdruck an dem Ausgang 60 eine gewünschte Höhe erreicht hat, die beispielsweise dem Wunsch des Fahrers an dem Bremsbetätigungsorgan 8 entspricht oder mit dem hydraulischen Bremsdruck korreliert, wird das Magnetventil 77 erregt, so dass der Übertritt von dem Durchlass 79 zu dem Durchlass 80 abgesperrt ist und keine weitere Druckluft in die Steuerkammer 81 strömen kann. Hiermit ist eine Bremsabschlussstellung erreicht. Das Erkennen einer gewünschten Bremswirkung kann auf vielfältige Weise erfolgen. Möglich ist beispielsweise, dass am Ausgang 60 oder dem weiteren stromabwärtigen Leitungszweig ein Drucksensor angeordnet ist, dessen Signal der Steuereinrichtung 53 zugeführt wird. Die Auswertung dieses Signals kann Aufschluss über die Höhe der erzielten Bremswirkung beim Anhänger geben. Weiterhin möglich ist eine Ermittlung der Kopplungskraft zwischen Zugfahrzeug und Anhänger, die auf einen Unterschied zwischen der Abbremsung des Zugfahrzeugs und der Abbremsung des Anhängers rückschließen lässt. Weiterhin kann bspw. über empirisch ermittelte Kennlinien eine Ermittlung der erforderlichen Druckbeaufschlagungsdauer der Steuerkammer 81 für die Herbeiführung eines gewünschten Bremsdrucks genutzt werden.
   Soll hingegen der pneumatische Ausgangsdruck am Ausgang 60 verringert oder beseitigt werden, wird das Magnetventil 78 bestromt, so dass das Magnetventil 78 eine Verbindung zwischen der Steuerkammer 81 und der Entlüftung 83 schafft.
- Alternativ ist eine Bremsbeaufschlagung des Anhängers auf hydro-pneumatischem Wege möglich. Dieses kann beispielsweise der Fall sein bei Einbruch der elektrischen Leistungsversorgung, für welche die Magnetventile 76, 77 und 78 in die in Fig. 8 dargestellten Schaltstellungen gezwungen werden. Für diese Schaltstellung gelangt für den hydro-pneumatischen Beaufschlagungspfad Druckluft von dem Steuereingang 52 über das Magnetventil 76 in Öffnungsstellung zu dem Durchlass 79 sowie von dort über das geöffnete Magnetventil 77 zu dem Durchlass 80, von wo eine Druckbeaufschlagung der Steuerkammer 81 erfolgt. Während für den elektro-pneumatischen Beaufschlagungspfad am Eingang 59 der Druck des Vorratsbehälters 5 anliegt, welcher somit nicht mit der Betätigung des Bremsbetätigungsorgans korreliert, korreliert der an dem Steuereingang 52 anliegende Druck mit der Betätigung des Bremsbetätigungsorgans 8. In diesem Fall kann der Relaiskolben 82 als Wiegekolben entsprechend DE 39 18 226 A1 ausgebildet sein, so dass sich an dem Ausgang 60 automatisch ein automatischer Ausgangsdruck einstellt, welcher mit dem Steuerdruck an dem Steuereingang 52 korreliert.

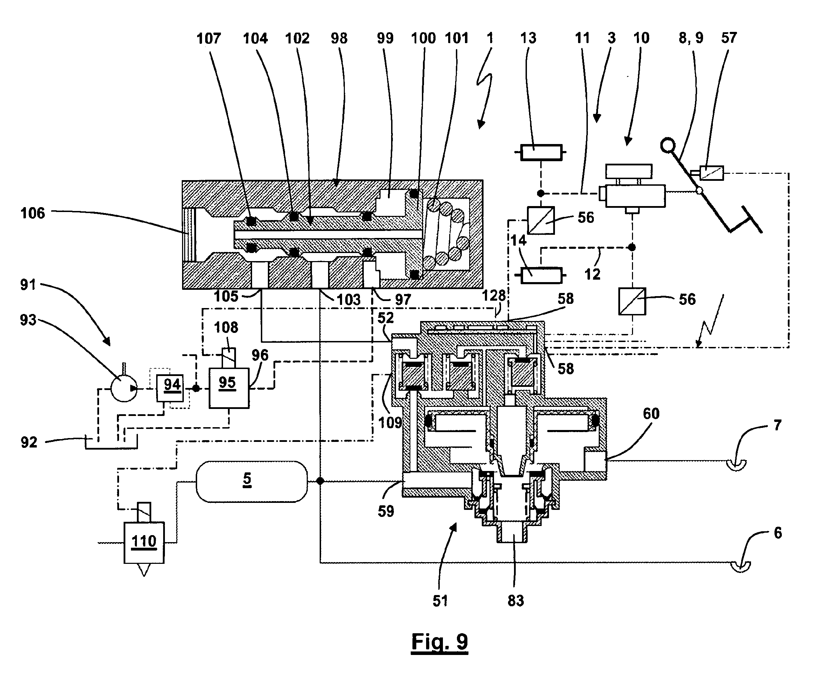

Während das in Fig. 8 dargestellte Druckregelmodul 51 mit den angesprochenen Verbindungen ohne Anpassung auch in die Bremseinrichtungen 1 gemäß Fig. 4, 5, 6, 7 integrierbar ist, für die der Steuereingang 52 mit dem Ausgang eines Anhängersteuerventils 4 bzw. eines Handbremsventils 73 zu verbinden ist, zeigt **Fig. 9** eine Bremseinrichtung 1 mit einer alternativen Beaufschlagung des Steuereingangs 52: In diesem Fall besitzt das Zugfahrzeug einen Hydraulikkreislauf, welcher neben dem im Folgenden erläuterten Zweck auch weiteren Funktionen wie beispielsweise einer Getriebesteuerung dienen kann. Der Hydraulikkreislauf 91 verfügt über ein Reservoir 92, aus welchem eine Pumpe 93 das Hydraulikmedium über einen Druckregler 94 einem Magnetventil 95 zuführt. Das Magnetventil 95 besitzt eine Durchlassstellung, in welcher Hydraulikmedium zu einem Ausgang 96 des Magnetventils 95 gefördert wird, sowie eine Entlüftungsstellung, in welcher das Hydraulikmedium von dem Ausgang 96 zu dem Behälter 92 geleitet werden kann. Der Ausgang 96 ist über einen Steuereingang 97 eines Bremsventils 98 mit einer Steuerkammer 99 verbunden, über die ein Steuerkolben 100 gegen die Beaufschlagung einer Druckfeder 101 mit dem Hydraulikdruck beaufschlagbar ist. Der Steuerkolben 100 ist gekoppelt mit einem Steuerschieber 102. Für hinreichende Druckbeaufschlagung der Steuerkammer 99 befindet sich das Bremsventil 98 in der in Fig. 9 dargestellten Schaltstellung. In dieser Schaltstellung ist ein pneumatischer Eingang 103 über eine Steuerkante 104 von einem pneumatischen Ausgang 105 des Bremsventils 98 getrennt. Der Ausgang 105 ist stattdessen über eine Entlüftung 106 entlüftet. Reicht hingegen der Druck in der Steuerkammer 99 nicht aus, um die Kraft der Druckfeder 101 zu überwinden, wird der Steuerkolben 100 mit dem Steuerschieber 102 gegenüber der Schaltstellung gemäß Fig. 9 nach links verschoben. Für diese Stellung trennt eine Steuerkante 107 den Ausgang 105 von der Entlüftung, während der Steuerschieber 102 eine pneumatische Verbindung zwischen Eingang 103 und Ausgang 105 ermöglicht. Dem Eingang 103 wird Druckluft aus dem Druckluftbehälter 5 zugeführt, während der Ausgang 105 mit dem Steuereingang 52 des Druckregelmoduls 51 verbunden ist. Die Steuereinrichtung 53 des Druckregelmoduls 51 steuert elektrisch einen Steuereingang 108 des Magnetventils 95 an. Erkennt die Steuereinrichtung 53 die Notwendigkeit einer Bremsung des Anhängers, beispielsweise für die Herbeiführung einer Feststellbremswirkung, so wird über die Steuereinrichtung 53 der Steuereingang 108 des Magnetventils 95 bestromt, was mit der Entlüftungsstellung korreliert, so dass Hydraulikmedium aus der Steuerkammer 99 zu dem Behälter 92 abgeführt werden kann. Die Druckfeder 101 schiebt den Steuerkolben 100 und den Steuerschieber 102 nach links, was eine Druckbeaufschlagung des Steuereingangs 52 des Druckregelmoduls 51 aus dem Druckluftbehälter 5 zur Folge hat, die die Betätigung des Relaiskolbens 82 wie zuvor erläutert zur Folge hat mit einer Öffnung des Einlassventils, also letztendlich einer Aussteuerung von Druckluft von dem Eingang 59 zu dem Ausgang 60 und zu dem Kupplungskopf Bremse 7.

Weiterhin ist aus Fig. 9 ersichtlich, dass die Steuereinrichtung 53 des Druckregelmoduls 51 multifunktional ausgebildet ist: Über einen Ausgang 109 steuert die Steuereinrichtung 53 ein Druckregelventil 110, welches zwischen den Druckluftbehälter 5 und eine Druckluftquelle wie einen Kompressor zwischengeschaltet ist. Über einen weiteren Ausgang 128 erfolgt die Ansteuerung des Magnetventils 95. Die weiteren Steuerungsmöglichkeiten durch die Steuereinrichtung 53 sind vielfältig. Beispielsweise kann über die Steuereinrichtung 53 auch eine Ansteuerung eines Antriebe des Kompressors oder von einer Kupplung des Kompressors erfolgen.

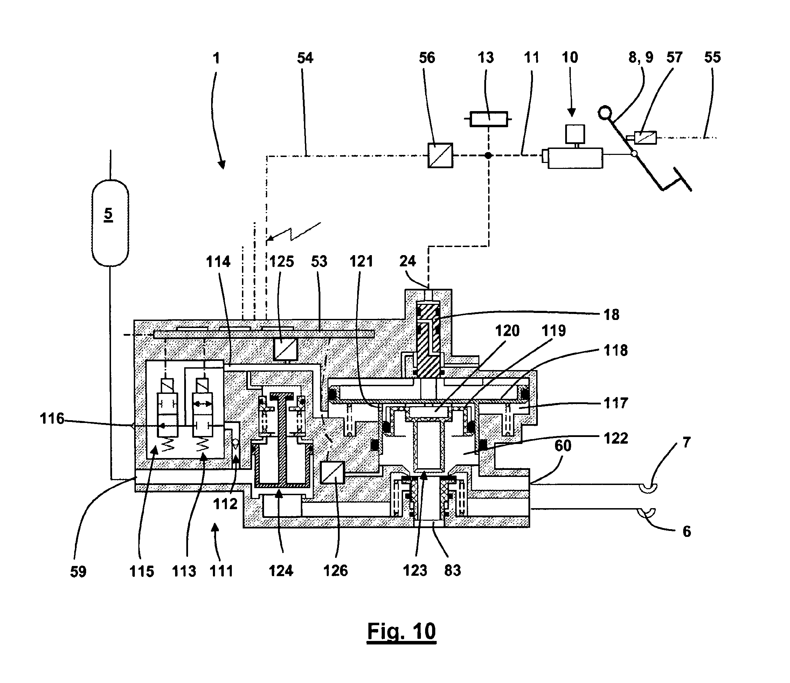

**Fig. 10** zeigt eine Ventileinheit 111, in welcher die Funktionen des Anhängersteuerventils 4 und des Druckregelmoduls 51 baulich vereinigt sind. Einem Druckluftbehälter 5 entstammende Druckluft ist über den Eingang 59 und ein Rückschlagventil 112 und ein als Magnetventil 113 ausgebildetes Sperrventil
- -: einerseits mit einem Durchlass 114 sowie
- -: andererseits über ein als Magnetventil 115 ausgebildetes Sperrventil mit einer Entlüftung 116
verbunden.

Das Magnetventil 113 befindet sich unbestromt in seiner Sperrstellung, während das Magnetventil 115 unbestromt in einer Durchlassstellung ist. Der Durchlass 114 mündet in eine Kammer 117, welche in der Art der Wiegekammer 27 gemäß Fig. 1 einen Kolben 118 auf einer einem hydraulisch über den Anschluss 24 beaufschlagten Relaiskolben 18 abgewandten Seite beaufschlagt. Abweichend zu Fig. 1 ist für das Ausführungsbeispiels gemäß Fig. 10 ein Ein-/Auslassventil nicht mit einem Fortsatz des Kolben 118 gebildet. Vielmehr ist gegenüber dem Kolben 118 ein weiterer Relaiskolben 119 geführt unter Ausbildung einer Steuerkammer 120 zwischen Kolben 118 und Relaiskolben 119. Die Steuerkammer 120 ist über einen Verbindungskanal 121 mit der Kammer 117 verbunden. Auf der der Steuerkammer 120 abgewandten Seite des Relaiskolbens 119 begrenzt dieser eine Bremsdruckkammer 122, die über ein Ein-/Auslassventil 123 entsprechend den zuvor erläuterten Ein-/Auslassventilen für geöffnetes Einlassventil mit Eingang 59 verbindbar ist und für geöffnetes Auslassventil mit der Entlüftung 83 verbindbar ist. Die Bremsdruckkammer 122 ist ständig mit dem Ausgang 60 verbunden. Eine Betätigung des Ein-/Auslassventils 123 erfolgt über einen Fortsatz des Relaiskolbens 119, der gleichzeitig den Auslassventilkörper bildet.

Für einen elektro-pneumatischen Beaufschlagungspfad 63 wird das Magnetventil 113 über die Steuereinrichtung 53 in seine Durchlassstellung angesteuert, während das Magnetventil 115 in seine Sperrstellung angesteuert wird. Druckluft gelangt derart aus dem Druckluftbehälter 5 in den Durchlass 114 und von dort in die Kammer 117 sowie durch den Verbindungskanal 121 in die Steuerkammer 120. Ein hinreichender Druckaufbau in der Steuerkammer 120 führt zu einer Verschiebung des Relaiskolbens 119 aus der in Fig. 10 dargestellten Stellung nach unten, bis ein Fortsatz des Relaiskolbens 119 zur Anlage an einen Doppelventilkörper kommt, womit das Auslassventil des Ein-/Auslassventils 123 geschlossen wird. Weitere Druckbeaufschlagung der Steuerkammer 120 führt zu einer Öffnung des Einlassventils des Ein-/Auslassventils 123, so dass über das Einlassventil Druckluft von dem Anschluss 59 zu der Bremsdruckkammer 122 und zu dem Ausgang 60 und zu dem Kupplungskopf Bremse 7 übertreten kann.

Für den Fall, dass ein einmal erreichter Bremsdruck in der Bremsdruckkammer 122 erhalten werden soll, wird das Magnetventil 113 in seine Schließstellung verbracht, während das Magnetventil 115 weiterhin in seiner Sperrstellung verbleibt.

Für einen Abbau des pneumatischen Ausgangsdrucks am Ausgang 60 werden die Magnetventile 113, 115 nicht bestromt, so dass diese in die in Fig. 10 dargestellte Stellung zurückkehren. Dies führt letztendlich dazu, dass die Steuerkammer 120 über die Entlüftung 116 entlüftet wird, so dass der Relaiskolben 119 in die in Fig. 10 dargestellte Stellung zurückkehren kann, womit von dem Ein-/Auslassventil 123 das Einlassventil geschlossen wird und das Auslassventil geöffnet wird. Dies führt zu einer Entlüftung des Ausgangs 60 über die Entlüftung 83.

Wie zuvor erläutert, kann alternativ oder kumulativ eine Druckbeaufschlagung des Ausgangs 60 über hydraulische Beaufschlagung des hydraulischen Eingangs 24 und den Relaiskolben 18 erfolgen, wobei dieser hydraulisch-pneumatische Beaufschlagungspfad im Wesentlichen dem in Fig. 1 dargestellten Beaufschlagungspfad entspricht.

Als weitere Besonderheit beinhaltet die Ventileinheit 111, insbesondere für die Ausgestaltung des Zugfahrzeuges als Schnellläufer, eine automatisierte Abrisseinrichtung. Kommt es zu einem Abriss der Bremsleitung zwischen Anhänger und Zufahrzeug, bspw. im Bereich des Kupplungskopfs Bremse 7, führt dies zu einer Entlüftung der Bremsdruckkammer 122. Liegt hydraulischer Druck an dem Eingang 24 oder pneumatischer Druck in der Steuerkammer 120 durch eine geeignete Beaufschlagung der Magnetventile13, 115 an, führt der Entfall des Drucks in der Bremsdruckkammer 122 und die damit verringerte Beaufschlagung des Kolbens 118 von unten dazu, dass von dem Ein-/Auslassventil 123 das Auslassventil geschlossen wird und das Einlassventil geöffnet wird. Damit kann der Kupplungskopf Vorrat 6 über das Ein-/Auslassventil 123 und den abgerissenen Kupplungskopf Bremse 7 entlüftet werden, womit eine Notbremseinrichtung des Anhängers wirksam werden kann. Um auch eine Entlüftung des Druckluftbehälters 5 über diese Verbindung zu vermeiden, ist auf dem Weg von dem Eingang 59 zu dem Ein-/Auslassventil 123 ein Abrissventil 124 vorgesehen, welches die genannte Verbindung automatisch schließt für einen Abriss des Kupplungskopfes Bremse 7.

Die Ventileinheit 111 besitzt weiterhin ein Messorgan 125, mit welchem der Druck in dem Durchlass 114, also der Druck in der Steuerkammer 120, erfasst wird, sowie ein Messorgan 126, über welches der Druck in der Bremsdruckkammer 122 erfasst wird. Die Ausgangssignale der Messorgane 125, 126 werden der Steuereinrichtung 53 zugeführt. Beispielsweise kann die Steuereinrichtung 53 über das Messorgan 126 detektieren, wenn ein Abriss des Kupplungskopfes Bremse 7 erfolgt. In diesem Fall kann eine Ansteuerung der Magnetventile 113, 115 derart erfolgen, dass die Steuerkammer 120 belüftet wird und wie oben erläutert der Kupplungskopf Vorrat 6 über das Ein-/Auslassventil 123 und den abgerissenen Kupplungskopf Bremse 7 entlüftet wird.

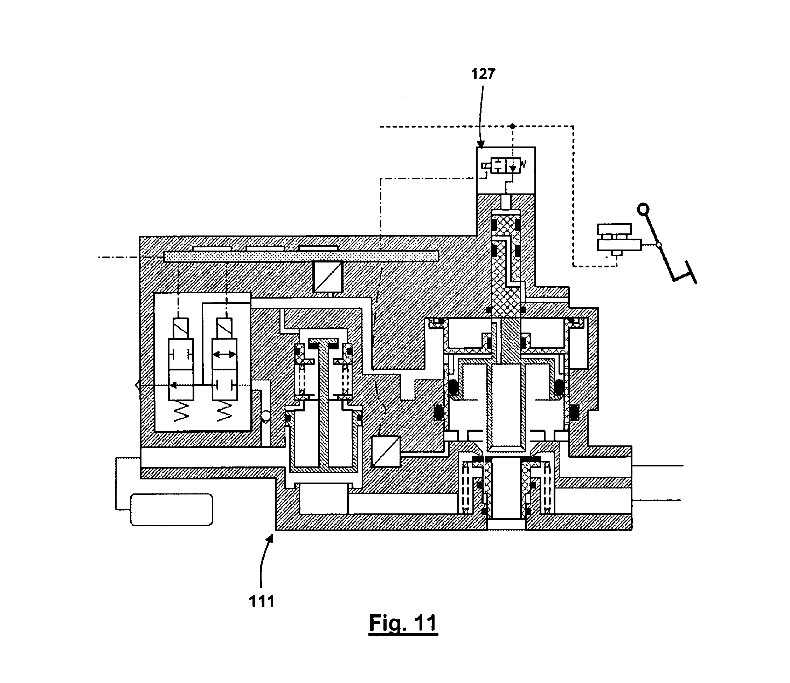

Für das in **Fig. 11** dargestellte Ausführungsbeispiel ist dem hydraulischen Anschluss 24 ein Magnetventil 127 vorgeschaltet, welches als Sperrventil ausgebildet ist und bei Bestromung durch die Steuereinrichtung 53 in seine Sperrstellung verbracht wird, so dass bei Bestromung, also funktionsfähigem elektro-pneumatischen Beaufschlagungspfad, der Anschluss 24 nicht hydraulisch beaufschlagt ist. Somit ist über das Magnetventil 127 der hydraulisch-pneumatische Beaufschlagungspfad außer Kraft gesetzt. Lediglich bei Verminderung der Ansteuerung des Magnetventils 127 oder Ausfall der elektrischen Anlage wird das Magnetventil 127 in seine monostabile Durchlassstellung verbracht, so dass in diesem Fall der hydraulische Anschluss 24 hydraulisch beaufschlagt wird und der hydraulisch-pneumatische Beaufschlagungspfad wirksam wird. Hierbei kann das Magnetventil 127 separat von der Ventileinheit 111 ausgebildet sein oder in diese integriert sein.

Die Erfindung findet vorzugsweise Einsatz für einen Traktor.

In Fig. 2 ist gestrichelt eine verbesserte Bremsdruckkennlinie 129 dargestellt bei Einsatz einer erfindungsgemäßen Bremseinrichtung. Insbesondere durch Nutzung des elektro-pneumatischen Beaufschlagungspfads 63 kann das Ansprechverhalten der Bremseinrichtung 1 verbessert werden, so dass bereits früher ein pneumatischer Ausgangsdruck erreicht wird. Weiterhin ist Fig. 2 zu entnehmen, dass erfindungsgemäß auch abgeknickte Bremsdruckkennlinien 129 herbeiführbar sind. Dies ist einerseits möglich durch geeignete Algorithmen in der Steuereinrichtung 53, welche für den elektro-pneumatischen Beaufschlagungspfad derartige Nichtlinearitäten erzeugen können. Ebenfalls möglich ist, dass für den Knick der Bremsdruckkennlinie 129 eine Umschalteinrichtung wirksam wird, womit eine Umschaltung von dem elektro-pneumatischen Beaufschlagungspfad 63 zu dem hydraulisch-pneumatischen Beaufschlagungspfad erfolgt.

Entsprechend ist in Fig. 3 gestrichelt eine verbesserte Bremskennlinie 130 wiedergegeben, die mittels der erfindungsgemäßen Bremseinrichtung 1 herbeiführbar ist. Mit dieser Bremskennlinie 130 kann die verzögerte Abbremsung vermieden werden. Für beginnende Abbremsung wird die Abbremsung des Anhängers auf mehr oder weniger exakt dem Niveau des Zugfahrzeugs gehalten. Auch hier ist es möglich, dass die Bremskennlinie 130 mit zunehmender Bremsbetätigung abknickt.

### BEZUGSZEICHENLISTE

- 1: Bremseinrichtung
- 2: Zugfahrzeug
- 3: Betriebsbremseinrichtung
- 4: Anhängersteuerventil
- 5: Druckluftbehälter
- 6: Kupplungskopf Vorrat
- 7: Kupplungskopf Bremse
- 8: Bremsbetätigungsorgan
- 9: Bremspedal
- 10: Bremszylinder
- 11: Bremsleitung
- 12: Bremsleitung
- 13: Betriebsbremszylinder
- 14: Betriebsbremszylinder
- 15: Eingang
- 16: Ausgang
- 17: h.-p. Beaufschlagungspfad
- 18: Relaiskolben
- 19: Kolbenfläche
- 20: Kolbenfläche
- 21: Gehäuse
- 22: Steuerkammer
- 23: Steuerkammer
- 24: Eingang
- 25: Eingang
- 26: Wiegekolben
- 27: Wiegekammer
- 28: Druckfeder
- 29: Fortsatz
- 30: Auslassventilkörper
- 31: Doppelventilkörper
- 32: Druckfeder
- 33: Einlassventilsitz
- 34: Einlasskammer
- 35: Ein-/Auslassventil
- 36: Handbetätigungsorgan
- 37: Handhebel
- 38: Welle
- 39: Hammerkopf
- 40: Bremsdruckkennlinie
- 41: Bremsdruckkennlinie
- 42: Bremsdruckkennlinie
- 43: Bremsdruckkennlinie
- 44: Abszisse
- 45: Ordinate
- 46: Bremskennlinie Zugfahrzeug
- 47: Bremskennlinie Anhänger
- 48: Abszisse
- 49: Ordinate
- 50: Be- und Entlüftungsventil
- 51: Druckregelmodul
- 52: Steuereingang
- 53: Steuereinrichtung
- 54: elektrisches Signal
- 55: elektrisches Signal
- 56: Messorgan
- 57: Messorgan
- 58: Anschluss
- 59: Eingang
- 60: Ausgang
- 61: Steuerausgang
- 62: Steuereingang
- 63: e.-p. Beaufschlagungspfad
- 64: Eingang
- 65: Wechselventil
- 66: Ausgang
- 67: Eingang
- 68: Feststellbremsventil
- 69: Eingang
- 70: Wechselventil
- 71: Eingang
- 72: Ausgang
- 73: Handbremsventil
- 74: elektrisches Signal
- 75: Bremslichtschalter
- 76: Magnetventil
- 77: Magnetventil
- 78: Magnetventil
- 79: Durchlass
- 80: Durchlass
- 81: Steuerkammer
- 82: Relaiskolben
- 83: Entlüftung
- 84: Einlasskammer
- 85: Bremsdruckkammer
- 86: Ein-/Auslassventil
- 87: Gehäuse
- 88: Einlassventilsitz
- 89: Doppelventilkörper
- 90: Auslassventilkörper
- 91: Hydraulikkreislauf
- 92: Reservoir
- 93: Pumpe
- 94: Druckregler
- 95: Magnetventil
- 96: Ausgang
- 97: Steuereingang
- 98: Bremsventil
- 99: Steuerkammer
- 100: Steuerkolben
- 101: Druckfeder
- 102: Steuerschieber
- 103: Eingang
- 104: Steuerkante
- 105: Ausgang
- 106: Entlüftung
- 107: Steuerkante
- 108: Steuereingang
- 109: Ausgang
- 110: Druckregelventil
- 111: Ventileinheit
- 112: Rückschlagventil
- 113: Magnetventil
- 114: Durchlass
- 115: Magnetventil
- 116: Entlüftung
- 117: Kammer
- 118: Kolben
- 119: Relaiskolben
- 120: Steuerkammer
- 121: Verbindungskanal
- 122: Bremsdruckkammer
- 123: Ein-/Auslassventil
- 124: Abrissventil
- 125: Messorgan
- 126: Messorgan
- 127: Magnetventil
- 128: Ausgang
- 129: Bremsdruckkennlinie
- 130: Bremskennlinie

## Patentansprüche

1. Bremseinrichtung (1) für ein hydraulisch gebremstes Zugfahrzeug (2), welches mit einem pneumatisch gebremsten Anhänger koppelbar ist, mit
a) einem Bremsbetätigungsorgan (8),
b) einem Bremszylinder (10) zur Erzeugung eines Hydraulikdrucks entsprechend der Betätigung des Bremsbetätigungsorgans (8),
c) einer nach Maßgabe des Hydraulikdrucks betätigbaren Betriebsbremse (13, 14), wobei
d) ein elektro-pneumatischer Beaufschlagungspfad (63) für eine Bremseinrichtung des Anhängers vorgesehen ist, in dem ein Messorgan (56; 57; 75) angeordnet ist, welches ein mit der Betätigung des Bremsbetätigungsorgans (8) korrelierendes elektrisches Signal (54; 55; 74) erzeugt, wobei in dem elektro-pneumatischen Beaufschlagungspfad (63) ein Druckregelmodul (51) angeordnet ist, mittels welchem in Abhängigkeit des elek- trischen Signals (54; 55; 74) ein pneumatischer Ausgangsdruck erzeugbar ist, der zur Erzeugung eines pneumatischen Bremsdruckes für den Anhänger Einsatz findet, und
e) auch ein hydraulisch-pneumatischer Beaufschlagungspfad (17) für die Bremseinrichtung des Anhängers vorgesehen ist, in dem der Hydraulikdruck einem Anhängersteuerventil (4) zugeführt wird und mittels des Anhängersteuerventils (4) nach Maßgabe des zugeführten Hydraulikdrucks ein pneumatischer Ausgangsdruck aussteuerbar ist, der zur Erzeugung eines pneumatischen Bremsdruckes für den Anhänger Einsatz findet,
**dadurch gekennzeichnet, dass**
f) der pneumatische Ausgangsdruck des Anhängersteuerventils (4) als Steuerdruck für einen Steuereingang (52) des Druckregelmoduls (51) verwendet wird.

2. Bremseinrichtung (1) nach Anspruch 1, **dadurch gekennzeichnet, dass** eine Steuereinrichtung (53) oder Umschalteinrichtung vorgesehen ist, über die der pneumatische Ausgangsdruck, der zur Erzeugung eines pneumatischen Bremsdruckes für den Anhänger Einsatz findet, mit höherer Priorisierung über den elektro-pneumatischen Beaufschlagungspfad (63) ausgesteuert wird als über den hydraulisch-pneumatischen Beaufschlagungspfad (17).

3. Bremseinrichtung (1) nach Anspruch 2, **dadurch gekennzeichnet, dass** dem Druckregelmodul (51) sowohl das elektrische Signal (54; 55; 74) als auch der pneumatische Ausgangsdruck des Anhängersteuerventils (4) zugeführt wird und das eine in dem Druckregelmodul (51) vorgesehene Umschalteinrichtung oder Steuereinrichtung (53) eine Priorisierung des elektro-pneumatischen Beaufschlagungspfades (63) gegenüber dem hydraulisch-pneumatischen Beaufschlagungspfad (17) vornimmt.

4. Bremseinrichtung (1) nach Anspruch 2 oder 3, **dadurch gekennzeichnet, dass** die Priorisierung darin besteht, dass
a) im Normalbetrieb der elektro-pneumatischer Beaufschlagungspfad (63) genutzt wird,
b) während in einem Notbetrieb mit einer Beeinträchtigung des elektro-pneumatischen Beaufschlagungspfads (63) der hydraulisch-pneumatische Beaufschlagungspfad (17) genutzt wird.

5. Bremseinrichtung (1) nach Anspruch 2 oder 3, **dadurch gekennzeichnet, dass** die Priorisierung darin besteht, dass
a) für eine Betätigung des Bremsbetätigungsorgans (8) zunächst der elektro- pneumatischer Beaufschlagungspfad (63) genutzt wird,
b) während
ba) nach einer Zeitspanne der Betätigung des Bremsbetätigungsorganes (8) oder
bb) nach einem hinreichenden Anstieg eines pneumatischen Bremsdruckes für den Anhänger
der hydraulisch-pneumatische Beaufschlagungspfad (17) genutzt wird.

6. Bremseinrichtung (1) nach einem der Ansprüche 1 bis 5, **dadurch gekennzeichnet, dass** dem Anhängersteuerventil (4) Druckluft aus einer Druckluftquelle (5) über ein Be- und Entlüftungsventil (50) zugeführt wird, welches für eine Nutzung des elektro-pneumatischen Beaufschlagungspfads (63) in eine Entlüftungsstellung gesteuert wird, während dieses für eine Nutzung des hydraulisch-pneumatischen Beaufschlagungspfads (17) in eine Belüftungsstellung gesteuert wird.

7. Bremseinrichtung (1) nach einem der Ansprüche 1 bis 6, **dadurch gekennzeichnet, dass** ein Wechselventil (65) vorgesehen ist, wobei
a) ein erster Eingang (67) des Wechselventils (65) mit einem Ausgang (16) des Anhängersteuerventils (4) gekoppelt ist,
b) ein zweiter Eingang (64) des Wechselventils (65) mit dem Ausgang (60) des Druckregelmoduls (51) gekoppelt ist und
c) ein Ausgang (66) des Wechselventils (65) mit einem Kupplungskopf Bremse (7) für den Anhänger gekoppelt ist.

8. Bremseinrichtung (1) nach einem der vorhergehenden Ansprüche, **dadurch gekennzeichnet, dass** dem Druckregelmodul (51) ein Betätigungssignal eines Handbremsventils (68; 73) zugeführt wird.

9. Bremseinrichtung (1) nach einem der vorhergehenden Ansprüche, **dadurch gekennzeichnet, dass** das Druckregelmodul (51) eine Steuereinrichtung (53) besitzt, die neben der Steuerung des Druckregelmoduls (51) weitere Funktionen erfüllt.

10. Verwendung einer Bremseinrichtung (1) nach einem der vorhergehenden Ansprüche für ein landwirtschaftliches Fahrzeug, insbesondere einen Traktor, welches mit einem Anhänger koppelbar ist.

## Claims

1. Brake device (1) for a hydraulically braked tractor (2) being coupleable with a pneumatically braked trailer with
a) a brake actuation means (8),
b) a brake cylinder (10) for producing a hydraulic pressure corresponding to the actuation of the brake actuation means (8),
c) a service brake (13, 14) being actuatable dependent on the hydraulic pressure, wherein
d) an electro-pneumatic actuation path (63) for a brake device of the trailer is provided including a measuring means (56; 57; 75), wherein the measuring means generates an electrical signal (54; 55; 74) correlating with the actuation of the brake actuation means (8) and wherein a pressure control module (51) is located in the electro-pneumatical actuation path (63), the pressure control module (51) being able to produce a pneumatical output pressure in dependence on the electrical signal (54; 55; 74) and wherein the pneumatical output pressure is used for producing a pneumatical brake pressure for the trailer, and
e) also a hydro-pneumatical actuation path (17) for the brake device of the trailer is proveded transferring the hydraulic pressure to a trailer control valve (4) and wherein by the trailer control valve (4) a pneumatical output pressure is produced or controlled depending on the hydraulic pressure, wherein the pneumatical output pressure is used for producing a pneumatic brake pressure of the trailer,
**characterized by**
f) the pneumatic output pressure of the trailer control valve (4) being used as a control or pilot pressure for a control or pilot port (52) of the pressure control module (51).

2. Brake device of claim 1, wherein a control device (53) or switching device is provided for controlling or outputting the pneumatic output pressure, which is used for producing a pneumatic brake pressure for the trailer, with a larger priority via the electro-pneumatical actuation path (63) than via the hydro-pneumatical actuation path (17).

3. Brake device of claim 2, wherein the pressure control module (51) receives both the electrical signal (54; 55; 74) and the pneumatical output pressure of the trailer control valve (4) and wherein a switching device or control device (53) provided in the pressure control module (51) priorizes the electro-pneumatical actuation path (63) with respect to the hydro-pneumatical actuation path (17).

4. Brake device of claim 2 or 3, wherein the priorizing comprises
a) using the electro-pneumatical actuation path (63) in the normal operation,
b) whereas in an emergency or fallback operation with an impairment or damage of the electro-pneumatical actuation path (63) the hydro-pneumatical actuation path (17) is used.

5. Brake device of claim 2 or 3, wherein the priorizing comprises
a) using initially the electro-pneumatical actuation path (63) with an actuation of the brake actuation means (8),
b) whereas
ba) after a time interval of the actuation of the brake actuation means (8) or
bb) after a sufficient increase of a pneumatical brake pressure for the trailer
the hydro-pneumatical actuation path (17) is used.

6. Brake device of one of claims 1 to 5, wherein pressurized air is transferred to the trailer control valve (4) from a pressurized air source (5) via an aerating and deaerating valve (50) which for the use of the electro-pneumatical actuation path (63) is controlled into the deaerating position, whereas the aerating and deaerating valve (50) is controlled into the aerating position when using the hydro-pneumatical actuation path (17).

7. Brake device of one of claims 1 to 6, wherein a shuttle valve (65) is provided, wherein
a) a first input (67) of the shuttle valve (65) is coupled with an output (16) of the trailer control valve (4),
b) a second input (64) of the shuttle valve (65) is coupled with an output (60) of the pressure control module (51) and
c) an output (66) of the shuttle valve (65) is coupled with a coupling head brake (7) for the trailer.

8. Brake device of one of claims 1 to 7, wherein an actuation signal of a hand brake valve (68; 73) is transmitted to the pressure control module (51).

9. Brake device of one of claims 1 to 8, wherein the pressure control module (51) comprises a control device (53) fulfilling additional functions additional to the control of the pressure control module (51).

10. Use of a brake device (1) of one of claims 1 to 9 for an agricultural vehicle, in particular a tractor, which is coupleable with a trailer.

## Revendications

1. Dispositif de freinage (1) pour un véhicule de traction (2) à freinage hydraulique, auquel peut être attelée une remorque à freinage pneumatique, comportant
a) un organe d'actionnement des freins (8),
b) un cylindre de frein (10) destiné à générer une pression hydraulique correspondant à l'actionnement de l'organe d'actionnement des freins (8),
c) un frein de service (13, 14), propre à être actionné en fonction de la pression hydraulique,
d) une voie d'alimentation électro-pneumatique (63) étant prévue pour un dispositif de freinage de la remorque, dans laquelle voie est agencé un organe de mesure (56 ; 57 ; 75) qui délivre un signal électrique (54 ; 55 ; 74) en corrélation avec l'actionnement de l'organe d'actionnement des freins (8), sachant que dans la voie d'alimentation électro- pneumatique (63) est agencé un module de réglage de la pression (51), par lequel une pression de sortie pneumatique peut être générée en fonction du signal électrique (54 ; 55 ; 74), laquelle est utilisée pour produire une pression de freinage pneumatique pour la remorque, et
e) une voie d'alimentation hydro-pneumatique (17) étant également prévue pour le dispositif de freinage de la remorque, dans laquelle voie la pression hydraulique est acheminée vers une vanne de commande de la remorque (4), et une pression de sortie pneumatique, qui est utilisée pour produire une pression de freinage pneumatique pour la remorque, peut être commandée en fonction de la pression hydraulique acheminée, au moyen de la vanne de commande de la remorque (4), **caractérisé en ce que**
f) la pression de sortie pneumatique de la vanne de commande de la remorque (4) est utilisée comme pression de commande pour une entrée de commande (52) du module de réglage de la pression (51).

2. Dispositif de freinage (1) selon la revendication 1, **caractérisé en ce qu'**il est prévu un dispositif de commande (53) ou un dispositif de commutation, par l'intermédiaire duquel la pression de sortie pneumatique, qui est utilisée pour produire une pression de freinage pneumatique pour la remorque, est commandée à travers la voie d'alimentation électro-pneumatique (63) avec une priorité plus élevée qu'à travers la voie d'alimentation hydro-pneumatique (17).

3. Dispositif de freinage (1) selon la revendication 2, **caractérisé en ce que** vers le module de réglage de la pression (51) sont acheminés le signal électrique (54 ; 55 ; 74), de même que la pression de sortie pneumatique de la vanne de commande de la remorque (4) et **en ce qu'**un dispositif de commutation ou dispositif de commande (53), prévu dans le module de réglage de la pression (51), accorde la priorité à la voie d'alimentation électro-pneumatique (63) par rapport à la voie d'alimentation hydro-pneumatique (17).

4. Dispositif de freinage (1) selon la revendication 2 ou 3, **caractérisé en ce que** l'octroi de priorité réside dans le fait que
a) la voie d'alimentation électro-pneumatique (63) est utilisée en cours de service normal,
b) alors que, en cas de service d'urgence, la voie d'alimentation hydro-pneumatique (17) est utilisée en entravant la voie d'alimentation électro-pneumatique (63).

5. Dispositif de freinage (1) selon la revendication 2 ou 3, **caractérisé en ce que** l'octroi de priorité réside dans le fait que
a) la voie d'alimentation électro-pneumatique (63) est utilisée d'abord pour actionner l'organe d'actionnement des freins (8),
b) alors que la voie d'alimentation hydro-pneumatique (17) est utilisée
ba) après un intervalle de temps d'actionnement de l'organe d'actionnement des freins (8), ou
bb) après un accroissement suffisant d'une pression de freinage pneumatique pour la remorque.

6. Dispositif de freinage (1) selon l'une quelconque des revendications 1 à 5, **caractérisé en ce que** de l'air comprimé issu d'une source d'air comprimé (5) est acheminé vers la vanne de commande de la remorque (4) via une vanne d'admission d'air ou d'échappement d'air (50), laquelle est commandée en position d'échappement d'air pour l'utilisation de la voie d'alimentation électro-pneumatique (63), alors qu'elle est commandée en position d'admission d'air pour l'utilisation de la voie d'alimentation hydro-pneumatique (17).

7. Dispositif de freinage (1) selon l'une quelconque des revendications 1 à 6, **caractérisé en ce qu'**il est prévu un sélecteur de circuit (65), sachant que
a) une première entrée (67) du sélecteur de circuit (65) est couplée à une sortie (16) de la vanne de commande de la remorque (4),
b) une deuxième entrée (64) du sélecteur de circuit (65) est couplée à la sortie (60) du module de réglage de la pression (51), et
c) une sortie (66) du sélecteur de circuit (65) est couplée à un frein à tête d'accouplement (7) pour la remorque.

8. Dispositif de freinage (1) selon l'une quelconque des revendications précédentes, **caractérisé en ce qu'**un signal d'actionnement d'une vanne de frein à main (68 ; 73) est transmis vers le module de réglage de la pression (51).

9. Dispositif de freinage (1) selon l'une quelconque des revendications précédentes, **caractérisé en ce que** le module de réglage de la pression (51) possède un dispositif de commande (53) qui remplit d'autres fonctions, en plus de la commande du module de réglage de la pression (51).

10. Utilisation d'un dispositif de freinage (1) selon l'une des revendications précédentes, pour un véhicule agricole, en particulier un tracteur qui peut être couplé à une remorque.
